# EUROPEAN PATENT SPECIFICATION

(11) **EP 0 366 876 B1**
(45) Date of publication and mention of the grant of the patent: **12.05.1993**
(21) Application number: 89113902.4
(22) Date of filing: 27.07.1989
(51) Int. Cl.: B01D 53/34

(54) **Exhaust gas treating apparatus**
Abgasbehandlungsapparat
Appareil de traitement de gaz d'échappement

(30) Priority: 10.11.1988 JP 282566/88; 25.10.1988 JP 267184/88; 05.10.1988 JP 129946/88 U; 05.10.1988 JP 129947/88 U; 05.10.1988 JP 129948/88 U; 02.06.1989 JP 64012/89 U
(43) Date of publication of application: 09.05.1990
(73) Proprietor: MITSUBISHI JUKOGYO KABUSHIKI KAISHA, Tokyo 100 (JP)
(72) Inventor: Murata, Masayoshi Nagasaki Technical Institute of, Nagasaki-shi Nagasaki-ken (JP); Nishida, Seiichi Nagasaki Technical Institute of, Nagasaki-shi Nagasaki-ken (JP); Murakami, Nobuaki Nagasaki Technical Institute of, Nagasaki-shi Nagasaki-ken (JP); Uchida, Satoshi Nagasaki Shipyard & Engine Works, Nagasaki-shi Nagasaki-ken (JP); Kaneko, Shozo Nagasaki Shipyard & Engine Works, Nagasaki-shi Nagasaki-ken (JP); Gengo, Tadashi Nagasaki Shipyard & Engine Works, Nagasaki-shi Nagasaki-ken (JP); Ichinari, Joji Nagasaki Shipyard & Engine Works, Nagasaki-shi Nagasaki-ken (JP); Morii, Atsushi Nagasaki Shipyard & Engine Works, Nagasaki-shi Nagasaki-ken (JP)
(74) Representative: Henkel, Feiler, Hänzel & Partner

(56) References cited:
- EP-A- 0 158 823
- US-A- 4 650 555
- PATENT ABSTRACTS OF JAPAN ,vol. 10, no. 49 (C-330)(2106), 26 February 1986; & JP-A-60 193522 (UNITIKA K.K.) 02.10.85

## Description

### BACKGROUND OF THE INVENTION

### 1. Field of the Invention

The present invention relates to apparatus for denitrating and/or desulfurizing exhaust gas discharged from boilers for power plants, diesel engines, gas turbines, various kinds of combustion furnaces, etc. by utilization of a glow-discharge plasma.

### 2. Description of Related Art

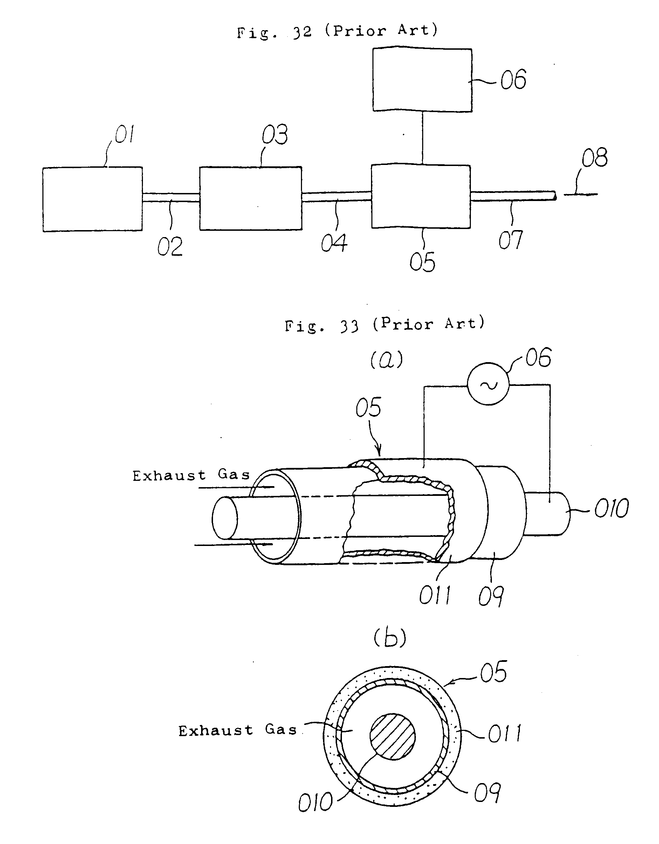

Figs. 32 and 33 show the arrangement of a typical conventional exhaust gas treating apparatus that employs a glow-discharge plasma. The prior art will next be explained by way of an example in which NOₓ in exhaust gas from a diesel engine is treated by the illustrated apparatus.

Referring to Fig. 32, exhaust gas from a diesel engine 01 is introduced into a plasma reaction vessel 05 through an exhaust pipe 02 via an exhaust pipe 04 of a cyclone collector 03. As shown in Figs. 33(a) and 33(b) in detail, the plasma reaction vessel 05 has an internal electrode 010 disposed inside a cylindrical glass reaction vessel 09, an external electrode 011 disposed outside the reaction vessel 09, and a power supply 06 for applying a glow-discharge voltage between the internal and external electrodes 010 and 011. The exhaust gas introduced into the plasma reaction vessel 05 is formed into a plasma in the glow-discharge region to remove NOₓ from the exhaust gas on the basis of the following principle. Namely, when a voltage is applied between the internal and external electrodes 010 and 011 by the use of the power supply 06, the exhaust gas is formed into a plasma by the atmospheric-pressure glow-discharge phenomenon. For example, NOₓ causes the following chemical reactions:

2NO₂ → 2NO + O₂ (1)

2NO + O₂ → N₂ + 2O₂ (2)

It should be noted that the plasma is an ionized gas mixture of excited molecules, excited atoms, free radicals, ions and neutral particles which is generated by collision of high-energy electrons accelerated by an external electric field with gas molecules. In the above-described formulae (1) and (2), it is considered that NOₓ which are given an energy of from several eV to several tens of eV changes into chemically active species and cause complicated reactions to become N₂ and O₂.

If the exhaust gas from an engine is formed into a plasma by utilization of the atmospheric-pressure glow-discharge phenomenon as described above to treat, for example, NO and NO₂, it is possible to attain an NOₓ removal rate of 80 to 90% when the concentration of (NO+NO₂) is in the range of from about 50 to 200ppm, the flow rate of exhaust gas is in the range of from about 30 to 60ℓ/min and the plasma generating power, that is, the power supplied from the power supply 06, is in the range of several W to several tens of W.

Accordingly, the above-described apparatus has heretofore been utilized as being a public nuisance countermeasure for apparatuses accompanied with various kinds of combustion, for example, boilers, gas turbines and diesel engines.

However, since the above-described prior art utilizes a glow-discharge plasma reaction chamber which is arranged such that the exhaust gas axially moves through the area defined between a rod-shaped internal electrode and a cylindrical external electrode with a cylindrical glass vessel interposed therebetween, the amount of exhaust gas treated is limited by the cross-sectional area between the internal and external electrodes, that is, the spacing between the two electrodes. Therefore, the prior art has the following problems:
(1) If the flow rate of exhaust gas is increased higher than about 30 to 60ℓ/min, no glow-discharge plasma is generated, so that NOₓ or the like cannot be removed.
(2) If the size of the electrodes is increased in the direction of flow of the exhaust gas, the effectiveness of removal of NOₓ or the like lowers markedly.
(3) Due to the above-described reasons (1) and (2), it is impossible with the prior art to realize several hundred to several hundred thousand ℓ/min class, large-capacity, exhaust gas apparatuses. Therefore, the industrial value of the prior art is low.

### SUMMARY OF THE INVENTION

In view of the above-described circumstances, it is a primary object of the present invention to provide an exhaust gas treating apparatus for treating an exhaust gas containing nitrogen oxides and/or sulfur oxides by means of a glow-discharge plasma which is capable of removing nitrogen oxides and/or sulfur oxides at high rate even if the flow rate of exhaust gas is relatively high.

To this end, the present invention provides the following means:
(a) The present invention provides an exhaust gas treating apparatus for making nitrogen oxides and/or sulfur oxides contained in exhaust gas harmless by the use of a glow-discharge plasma, comprising: a cylindrical reaction vessel both ends of which are open and which is made of an electrical insulator; a plurality of porous electrodes provided inside the reaction vessel in such a manner that the planes of the electrodes extend substantially perpendicular to the axis of the reaction vessel; a porous dielectric member installed between each pair of adjacent porous electrodes with a predetermined space provided between the same and one of the two electrodes; a power supply for applying a voltage for glow discharge to the porous electrodes; and an ammonia supply means connected to an inlet pipe of the reaction vessel.
(b) In addition, the present invention provides an exhaust gas treating apparatus that utilizes a glow-discharge plasma, comprising: a plurality of flat plate electrodes and a plurality of sawtooth electrodes each constituted by a flat plate with corrugated surfaces, the flat plate and sawtooth electrodes being disposed alternately and parallel to each other; and a power supply connected to the flat plate and sawtooth electrodes; wherein a fluid which is to be treated is arranged to flow between each pair of adjacent flat plate and sawtooth electrodes, preferably in a direction perpendicular to the long edges of the crests of the corrugations formed on the sawtooth electrodes with an ammonia supply being provided.
(c) In addition, the present invention provides an exhaust gas treating apparatus having the above-described flat plate and sawtooth electrodes, further including a flate plate made of a dielectric material which is disposed between each pair of adjacent sawtooth and flat plate electrodes and in contact with the flat plate electrode and a gas analyser.
(d) In addition, the present invention provides an exhaust gas treating apparatus having the above-described flat plate and sawtooth electrodes, wherein there are provided a plurality of flat plate electrodes each sandwiched between flat dielectric plates and a plurality of sawtooth electrodes each constituted by a flat plate with corrugated surfaces, the flat plate and sawtooth electrodes being alternately disposed; a voltage is applied between the flat plate and sawtooth electrodes; and a fluid which is to be treated is arranged to flow between each pair of adjacent flat plate and sawtooth electrodes, the flow of the fluid being parallel to the long edges of the crests of said sawtooth electrodes and a gas analyser is provided.
(e) In addition, the present invention provides an exhaust gas treating apparatus for treating nitrogen oxides and/or sulfur oxides contained in exhaust gas by the use of a glow-discharge plasma, comprising: a cylindrical reaction vessel both ends of which are closed and which is made of a dielectric material, the reaction vessel having openings provided in the side wall; a cylindrical internal electrode coaxially extending through the reaction vessel and having a plurality of bores provided in the peripheral wall, the internal electrode being supplied with exhaust gas mixed with ammonia; an external electrode provided in such a manner as to surround the outer periphery of the reaction vessel; an exhaust gas outlet or outlets extending through the external electrode; and means for applying a voltage for glow discharge between the internal and external electrodes.
(f) In addition, the present invention provides an exhaust gas treating apparatus as defined in (e), comprising: a cylindrical reaction vessel made of a dielectric material and having a plurality of bores for gas passage provided in the side wall; a first cylindrical electrode made of an electrical conductor and having a plurality of bores for gas passage provided in the side wall, the first cylindrical electrode covering the outside wall of the cylindrical reaction vessel; a second cylindrical electrode made of an electrical conductor, the second cylindrical electrode having threads formed on the outer peripheral surface and a plurality of bores for gas passage provided along the crests and/or roots of the threads, and the second cylindrical electrode being coaxially provided inside the cylindrical reaction vessel; and a power supply connected to the first and second cylindrical electrodes; wherein a plurality of units each comprising the cylindrical reaction vessel and the first and second cylindrical electrodes are disposed parallel to each other and an exhaust gas mixed with ammonia which is to be treated is introduced into the second cylindrical electrodes.
(g) In addition, the present invention provides an exhaust gas treating apparatus as defined in (e), comprising: a cylindrical reaction vessel made of a dielectric material and having a plurality of bores for gas passage provided in the side wall; a first cylindrical electrode made of an electrical conductor and having a plurality of bores for gas passage provided in the side wall, the first cylindrical electrode covering the outside wall of the cylindrical reaction vessel; a second cylindrical electrode made of an electrical conductor, the second cylindrical electrode having a plurality of bores for gas passage provided in the side wall, each bore having a cylindrical outward projection provided around it, and the second cylindrical electrode being coaxially provided inside the cylindrical reaction vessel; and a power supply connected to the first and second cylindrical electrodes; wherein a plurality of units each comprising the cylindrical reaction vessel and the first and second cylindrical electrodes are disposed parallel to each other and an exhaust gas mixed with ammonia which is to be treated is introduced into the second cylindrical electrodes.

According to the means stated in (a), an exhaust gas which is to be treated is mixed with a very small amount of ammonia as a buffer gas for promoting chemical reactions and the resulting mixture is introduced into the reaction vessel. A glow discharge occurs between the porous electrodes inside the reaction vessel, so that the gas mixture is formed into a plasma. As a result, nitrogen oxides and/or sulfur oxides actively cause chemical reactions to form N₂ and/or S.

The glow discharge taking place inside the reaction vessel is stabilized by virtue of the porous electrodes.

Further, the porous dielectric member enables a large amount of exhaust gas to come into contact with the plasma at high efficiency.

Thus, even if the flow rate of exhaust gas which is to be treated is increased, there is no lowering in the rate of removal of nitrogen oxides and/or sulfur oxides and it is therefore possible to increase the exhaust gas treating capacity.

According to the means stated in (b), when an exhaust gas mixed with ammonia, for example, is supplied to the plasma reaction vessel, the exhaust gas flows between the flat plate and sawtooth electrodes which are generating glow discharge in response to a high voltage applied thereto from the power supply, the exhaust gas being preferably arranged to flow in a direction perpendicular to the long edges of the crests of the corrugations formed on the sawtooth electrodes. At this time, the exhaust gas is activated by the plasma to cause chemical reactions, thus removing nitrogen oxides and sulfur oxides. The corrugations formed on the electrode enables a glow discharge to occur easily and also permits an increase in the area of contact with the exhaust gas, which results in an improvement in the exhaust gas treating effectiveness. Since the corrugations cause turbulence in the flow of exhaust gas, ions are diffused and it is therefore possible to suppress generation of an arc discharge.

Thus, it is possible to treat a large amount of exhaust gas at high efficiency.

In the apparatuses stated in (c) and (d), a glow-discharge plasma is generated between the flat plate and sawtooth electrodes by application of a voltage and the fluid to be treated is activated by the plasma, so that nitrogen oxides and sulfur oxides contained in the fluid are readily decomposed into nitrogen, sulfur and oxygen.

The dielectric plate provided on the surface of the flat plate electrode prevents the glow discharge from changing into an arc discharge. In this way, the exhaust gas is readily treated.

In the apparatus stated in (e), the means for stabilizing the generation of plasma is constituted by bores which are provided in the peripheral wall of the internal electrode extending through the reaction vessel so as to stabilize the glow discharge.

Thus, a voltage is applied between the internal and external electrodes while a gas containing nitrogen oxides and/or sulfur oxides and ammonia is being discharged from the bores provided in the internal electrode, thereby generating a plasma of the gas mixture.

According to this apparatus, even if the flow rate of exhaust gas is increased, there is no lowering in the rate of removal of nitrogen oxides and/or sulfur oxides by virtue of the presence of ammonia serving as a buffer gas for promoting chemical reactions and stabilization of the plasma by the presence of the bores provided in the internal electrode. Accordingly, it is possible to increase the exhaust gas treating capacity.

In the apparatus stated in (f), an exhaust gas mixed with ammonia flows into the cylindrical reaction vessel through the bores provided in the second cylindrical electrode. Then, the gas is discharged to the outside through the bores respectively provided in the cylindrical reaction vessel and the first cylindrical electrode.

On the other hand, a glow discharge occurs between the first and second cylindrical electrodes. Accordingly, the gas inside the reaction vessel is formed into a plasma and actively performs chemical reactions. Through the chemical reactions, NOₓ and SOₓ contained in the exhaust gas are readily removed.

In the above-described process, the generation of glow discharge is facilitated by the threads formed on the second cylindrical electrode. Since the gas mainly flows in the radial direction, there is no fear of the glow discharge dying and there is no lowering in the treating efficiency even if a large amount of gas is supplied. Further, since bores for gas passage are provided in the discharge section, ions are carried by the gas, so that generation of a spark is suppressed. Accordingly, the glow discharge is maintained stably.

Thus, it is possible to readily treat a large amount of nitrogen oxides and sulfur oxides in the exhaust gas by means of a relatively small-sized apparatus. The present invention thus provides apparatus which is useful for practical application.

In the apparatus stated in (g), an exhaust gas mixed with ammonia flows into the cylindrical reaction vessel through the bores provided in the second cylindrical electrode. Then, the gas is discharged to the outside through the bores respectively provided in the cylindrical reaction vessel and the first cylindrical electrode. On the other hand, a glow discharge occurs between the first and second cylindrical electrodes. Accordingly, the gas passing there is formed into a plasma and actively performs chemical reactions. Through the chemical reactions, NOₓ and SOₓ contained in the exhaust gas are removed.

In the above-described process, the generation of glow discharage in the cylindrical reaction vessel is facilitated by the cylindrical projections formed on the second cylindrical electrode. Since the gas mainly flows in the radial direction, there is no fear of the glow discharge dying and there is no lowering in the treating efficiency even if a large amount of gas is supplied.

Thus, it is possible to readily treat a large amount of nitrogen oxides and sulfur oxides in the exhaust gas by means of a relatively small-sized apparatus. The present invention thus provides an apparatus which is useful for practical application.

### BRIEF DESCRIPTION OF THE DRAWINGS

The above and other objects, features and advantages of the present invention will become more apparent from the following description of the preferred embodiments thereof, taken in conjunction with the accompanying drawings, in which like reference numerals denote like elements, and of which:
Fig. 1 is a block diagram showing a first embodiment of the present invention;
Fig. 2 is a sectional view of the plasma reaction vessel employed in the first embodiment;
Fig. 3 is a perspective view of the porous electrode section in the first embodiment;
Fig. 4 is a perspective view of the plasma reaction vessel employed in a second embodiment of the present invention;
Fig. 5 is a longitudinal sectional view of the plasma reaction vessel in the second embodiment;
Figs. 6 and 7 are graphs showing the advantageous effects of the second embodiment;
Fig. 8 is a block diagram showing a third embodiment of the present invention;
Fig. 9 is a partially-cutaway perspective view of the plasma reaction vessel in the third embodiment;
Fig. 10 is a transverse sectional view of the plasma reaction vessel in the third embodiment;
Fig. 11 is a graph of the NO₂ removal rate, which shows the advantageous effects of the third embodiment;
Fig. 12 is a block diagram showing a fourth embodiment of the present invention;
Fig. 13 is a transverse sectional view of the plasma reaction vessel in the fourth embodiment;
Fig. 14 is a block diagram showing a fifth embodiment of the present invention;
Fig. 15 shows the arrangement of a device according to the fifth embodiment;
Fig. 16 is a sectional view taken along the line X-X of Fig. 15;
Figs. 17 and 18 are graphs showing the advantageous effects of the fifth embodiment;
Fig. 19 is a block diagram showing a sixth embodiment of the present invention;
Fig. 20 is a partially-cutaway perspective view of the plasma reaction vessel in the sixth embodiment;
Fig. 21 is a sectional view taken along the line Y-Y of Fig. 20;
Fig. 22 is a partially-cutaway perspective view of a cylindrical reaction vessel constituting the plasma reaction vessel in the sixth embodiment;
Fig. 23 is a sectional view of a second cylindrical electrode in the sixth embodiment;
Figs. 24 and 25 are graphs showing advantageous effects of the sixth embodiment;
Fig. 26 is a partially-cutaway perspective view of the plasma reaction vessel employed in a seventh embodiment of the present invention;
Fig. 27 is a sectional view taken along the line Z-Z of Fig. 26;
Fig. 28 is a partially-cutaway perspective view of a cylindrical reaction vessel constituting the plasma reaction vessel of the seventh embodiment;
Fig. 29 is a sectional view of the cylindrical reaction vessel shown in Fig. 28;
Figs. 30 and 31 are graphs showing advantageous effects of the seventh embodiment;
Fig. 32 is a block diagram showing the arrangement of a prior art;
Fig. 33(a) is a partially-cutaway perspective view of the plasma reaction vessel employed in the prior art; and
Fig. 33(b) is a sectional view of the plasma reaction vessel shown in Fig. 33(a).

### DESCRIPTION OF THE PREFERRED EMBODIMENTS

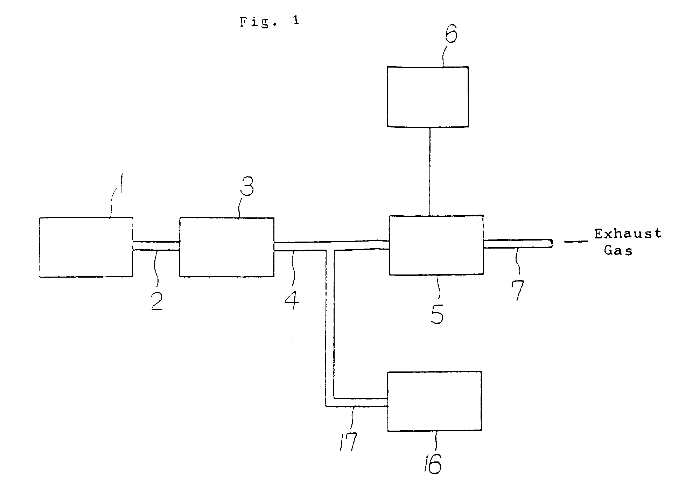

A first embodiment of the present invention will first be described with reference to Figs. 1, 2 and 3.

Referring to Fig. 1, the reference numeral 1 denotes a general-purpose combustion furnace which is an object of exhaust emission control. The reference numeral 3 denotes a dust collector (e.g., cyclone collector), and 2 an exhaust pipe for carrying the exhaust gas from the combustion furnace 1 to the dust collector 3. In the dust collector 3, particles that are contained in the exhaust gas are removed. The reference numeral 5 denotes a plasma reaction vessel, 4 an exhaust pipe for carrying the exhaust gas from the dust collector 3 to the plasma reaction vessel 5. The reference numeral 6 denotes a power supply for applying a plasma generating voltage to the electrodes of the plasma reaction vessel 5, and 7 an outlet pipe for discharging the treated gas which is connected to plasma reaction vessel 5. The reference numeral 16 denotes an ammonia supply device that supplies ammonia at a flow rate which may be set as desired within the range of from several ℓ/min to several tens of ℓ/min, and 17 a supply pipe which connects the ammonia supply device 16 to the inlet of the plasma reaction vessel 5.

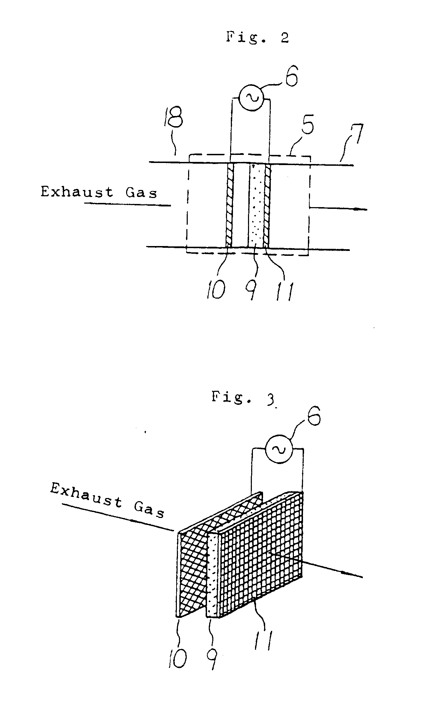

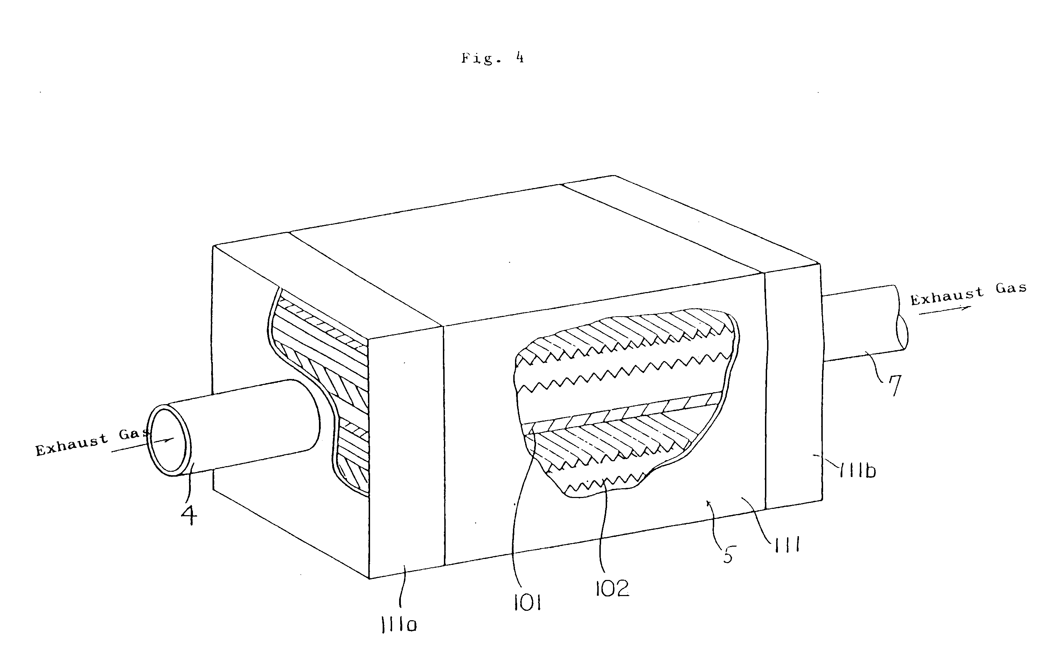

The plasma reaction vessel 5 will next be explained in detail with reference to Figs. 2 and 3. It should be noted that Fig. 3 is a perspective view showing the arrangement of the plasma reaction vessel 5 shown in Fig. 2.

The plasma reaction vessel 5, which is a cylindrical vessel both ends of which are open, has a pair of first and second plate-shaped porous electrodes 10 and 11 which are provided therein in such a manner that the planes of the electrodes 10 and 11 extend substantially perpendicular to the axis of the plasma reaction vessel 5. The porous electrodes 10 and 11 are connected to the power supply 6.

A porous dielectric member 9 is installed between the porous electrodes 10 and 11 with a space provided between the same and one of the two electrodes 10 and 11. The porous dielectric member 11 is formed from a porous ceramic material.

The plasma reaction vessel 5 having the above-described arrangement is supplied with a gas mixture of the exhaust gas from the combustion furnace 1 and ammonia from the ammonia supply pipe 17. The gas mixture is introduced into the space provided in front of the porous dielectric member 9 through the pores in the porous electrode 10, formed into a plasma by means of a glow discharge, made harmless through the reactions described later, and then discharged to the outside through the respective pores in the porous dielectric member 9 and the porous electrode 11. It should be noted that the flow rate of ammonia supplied from the ammonia supply device 16 is in the range of from several ℓ/min to several tens of ℓ/min.

The above-described plasma is a glow-discharge plasma whereby gas molecules such as ammonia, NOₓ and SOₓ are excited and dissociated, thus the gas molecules being brought into a chemically active state. As a result, for example, the following chemical reactions are caused:

NH₃+ electronic energy of about 6.4eV → NH₂+H (3)

2NO₂+ electronic energy of about 9.5eV → 2NO+O₂ (4)

NH₂+NO → N₂+H₂O (5)

2NH₂+SO₂ → S+N₂+2H₂O (6)

The above-described formulae (3) to (6) mean that NO, NO₂ and SO₂ in the exhaust gas from the combustion furnace 1 that is introduced into the plasma reaction vessel 5 form N₂, S and H₂O.

In the prior art apparatus [see Fig. 33(b)], since the exhaust gas passes through the space defined between the internal electrode and the glass vessel, the plasma is unstable if the flow rate of exhaust gas is higher than about 60ℓ/min, and therefore the upper limit of the flow rate range within which the exhaust gas can be effectively treated is about 100ℓ/min. In contrast, in this embodiment the porous electrodes and the porous dielectric member, which have a large number of pores, are installed parallel to a plane perpendicular to the direction of flow of the exhaust gas and it is, therefore, possible to enable a large amount of exhaust gas to come into contact with the plasma in an instant.

More specifically, it is possible with this embodiment to treat the exhaust gas supplied even at a flow rate of about 1,000ℓ/min without a lowering in the rate of removal of NOₓ and SOₓ.

Thus, the apparatus of this embodiment provides a treating capacity which is 10 or more times that of the prior art.

It should be noted that, although in this embodiment an exhaust gas containing both NOₓ and SOₓ is treated, the present invention may also be applied to the treatment of an exhaust gas containing only NOₓ or SOₓ as a harmful gas component.

Although in the foregoing description the number of porous electrodes is two, the number of porous electrodes may be three or more.

A second embodiment of the present invention will next be explained with reference to Figs. 4 to 7.

In this embodiment, the plasma reaction vessel 5 in the apparatus shown in Fig. 1 is arranged as follows.

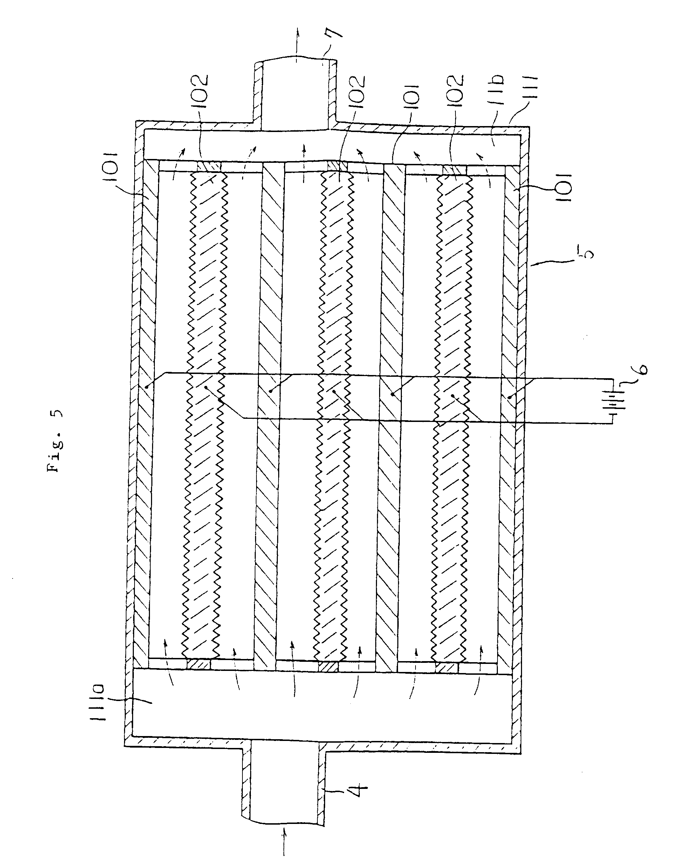

The reference numeral 6 denotes a power supply for supplying electric power for generation of a plasma to a plasma reaction vessel 5. The plasma reaction vessel 5 has a duct-shaped casing 111 as shown in Figs. 4 and 5. The casing 111 has spaces 111a and 111b provided therein at the front and rear ends, respectively. In addition, a flat plate anode 101 and a sawtooth cathode 102 constituted by a flat plate having corrugated surfaces are alternately placed horizontally in the casing 111 at predetermined spacings, the cathodes 102 being disposed in such a manner that the long edges of the crests of the corrugations extend perpendicular to the direction of flow of the gas, that is, the longitudinal axis. The flat plate anodes 101 are disposed so that the uppermost and lowermost layers of the stack of anodes 101 and cathodes 102 are constituted by anodes 101, respectively. The power supply 6 is connected to the anodes 101 and the cathodes 102.

In the above-described arrangement, the exhaust gas containing NOₓ and SOₓ from the combustion furnace 1 is first supplied to the dust collector 3 where particulate dusts are removed and then mixed with ammonia which is supplied from the ammonia supply device 16 at a flow rate which is about 1% of that of the exhaust gas, before being introduced into the plasma reaction vessel 5. In the plasma reaction vessel 5, the gas mixture of the exhaust gas and ammonia is distributed in the front space 111a so as to pass through the spaces defined between the adjacent flat plate anodes 101 and the corrugated cathodes 102, causing chemical reactions (described later) therein, and thus NOₓ and SOₓ being removed. Thereafter, the treated gas comes out to the rear space 111b and flows into the discharge pipe 7.

A glow discharge occurs between each pair of adjacent anode 101 and cathode 102 by a high voltage applied therebetween, thus generating a plasma of the exhaust gas mixed with ammonia.

This plasma is a glow-discharge plasma whereby gas molecules such as ammonia, NOₓ and SOₓ are excited and dissociated to form a chemically active state, thereby performing denitration and desulfurization represented by the formulae (3) to (6) described in connection with the first embodiment.

In each flow-discharge reaction region, the corrugations of the cathode 102 enable an increase in the area of contact with the exhaust gas mixed with ammonia, thus enhancing the treating efficiency. The corrugations also enable a glow discharge to occur easily and cause turbulence in the flow of the exhaust gas, which causes diffusion of ions to suppress generation of an arc discharge. Thus, efficient chemical reactions are maintained.

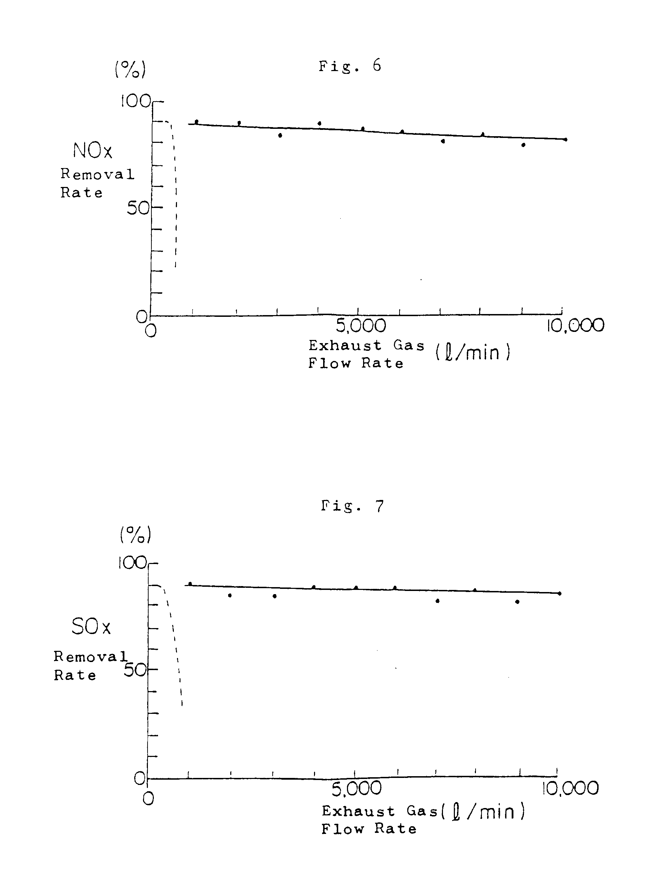

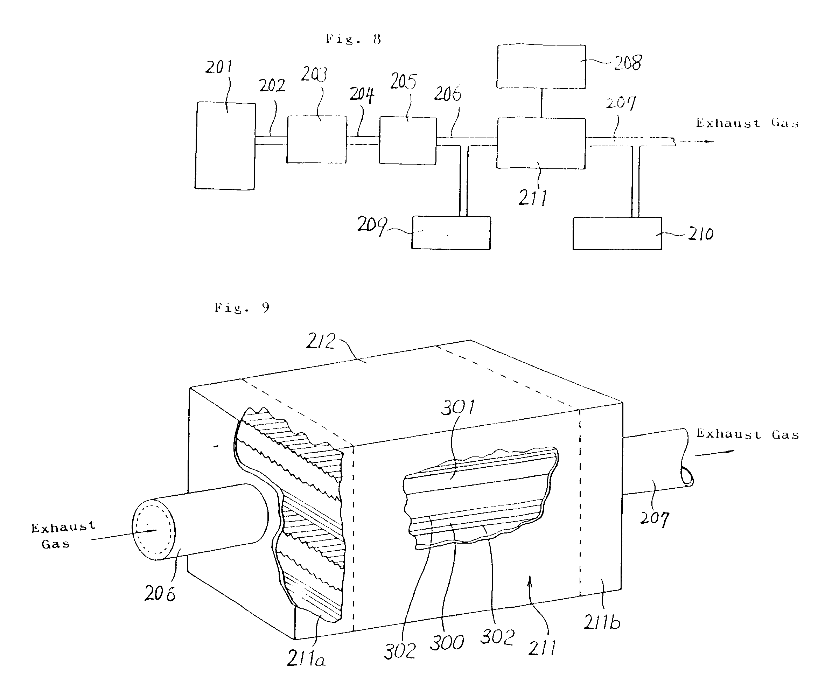

Figs. 6 and 7 show NOₓ (50 to 200ppm) and SOₓ (about 100ppm) removing conditions attained by this embodiment. In these figures, the chain lines show the results obtained by the prior art, while the solid lines show the results by this embodiment. It will be understood that the exhaust gas treating capacity has markedly increased.

Thus, it is possible according to this embodiment to treat a large amount of exhaust gas at high efficiency with a relatively small sized apparatus.

A third embodiment of the present invention will next be explained with reference to Figs. 8 to 10.

This embodiment is an exhaust gas treating apparatus which is suitable for treating nitrous oxide (N₂O) contained in exhaust gas. Exhaust gas from a combustion furnace 201 is carried to a dust collector 203 through an exhaust pipe 202. The dust collector 203, which is, for example, a cyclone collector or an electrostatic precipitator, collects particles contained in the exhaust gas. Thereafter, the exhaust gas from the dust collector 203 is carried to a dehumidifier 205 through an exhaust pipe 204. In the dehumidifier 205, water contained in the exhaust gas is removed. Further, the exhaust gas from the dehumidifier 205 is carried to a plasma reaction vessel 211 through an exhaust pipe 206. The exhaust gas from the plasma reaction vessel 211 is discharged to the outside through an outlet pipe 207 for discharging the treated gas. Further, first and second gas analyzers 209 and 210 are connected to the exhaust pipe 206 and the outlet pipe 207, respectively. These gas analyzers 209 and 210 are, for example, gas chromatographies, for measuring the concentration of N₂O gas.

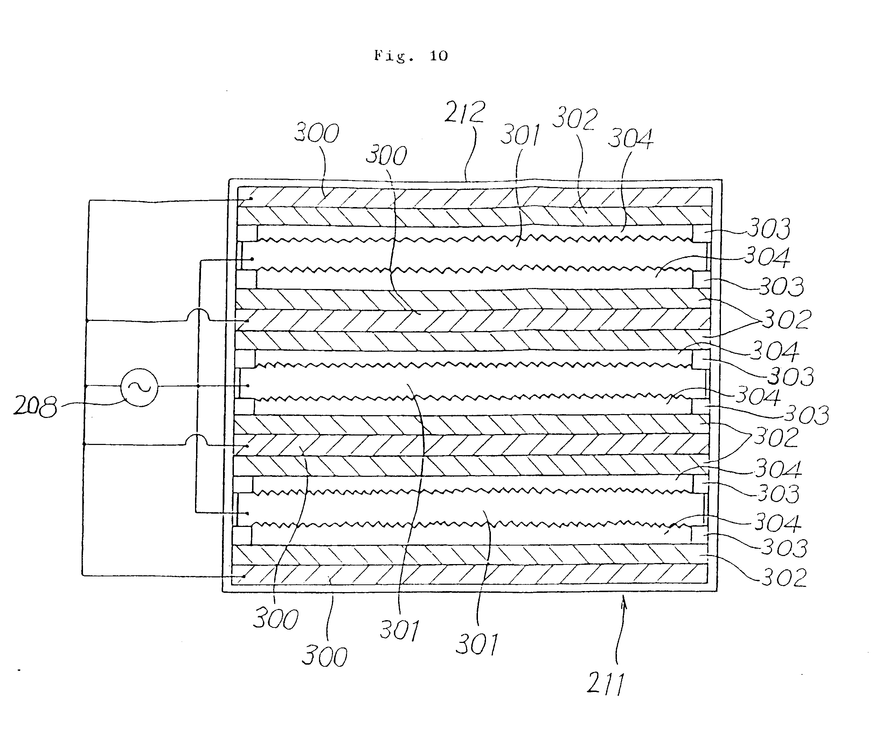

A power supply 208 supplies a plasma generating power to the plasma reaction vessel 211. As shown in Figs. 9 and 10, the plasma reaction vessel 211 has a duct-shaped casing 212. The casing 212 has spaces 211a and 211b provided therein at the front and rear ends, respectively. In addition, a flat plate electrode 300 which is sandwiched between a pair of flat dielectric plates 302 and a sawtooth electrode 301 constituted by a flat plate having corrugated surfaces are alternately placed horizontally in the casing 212 at predetermined spacings, the sawtooth electrodes 301 being disposed in such a manner that the long edges of the crests of the corrugations extend parallel to the direction of flow of the gas, that is, the longitudinal axis. The flat plate electrodes 300 are disposed so that the uppermost and lowermost layers of the stack of electrodes 300 and 301 are constituted by flat plate electrodes 300, respectively, and the uppermost and lowermost plates 302 are removed. The power supply 208 is connected to the electrodes 300 and 301. It should be noted that the reference numeral 303 in Fig. 10 denotes mounts each serving also as a spacer, the mounts 303 being made of an insulating material. The flat plate electrodes 300 and the sawtooth electrodes 301 are made of a conductor, for example, SUS 304, copper or Aℓ. The pitch of the sawtooth corrugations of the electrodes 301 is set at 1 to 5mm and the depth thereof at 0.5 to 5mm with a view to enabling a plasma to be generated easily. The dielectric plates 302 are made of an inorganic material which has a dieletric constant of 3 to 10 in the temperature range of from 100 to 600°C and an electric resistivity of 1 x 10¹⁰ to 1 x 10¹⁸Ω·cm, for example, quartz glass, aluminous porcelain (Aℓ₂O₃ ceramics), zircon porcelain or SiO₂.

In the above-described arrangement, the exhaust gas containing N₂O which is generated from the combustion furnace 201 is carried through the exhaust pipe 202 to the dust collector 203 where particles are removed from the exhaust gas and then the exhaust gas is carried to the dehumidifier 205 through the exhaust pipe 204. In the dehumidifier 205, water is removed from the exhaust gas so that a plasma will be readily generated. The dehumidified gas is then carried through the exhaust pipe 206 to the front space 211a in the plasma reaction vessel 211.

On the other hand, the concentration of N₂O contained in the exhaust gas carried to the plasma reaction vessel 211 is measured with the first gas analyzer 209. In this embodiment, the N₂O concentration was about 80 to 120ppm.

The exhaust gas carried to the front space 211a in the plasma reaction vessel 211 is then carried to the rear space 211b through a glow-discharge region, that is, an exhaust gas passage 304, which is defined between each pair of adjacent dielectric plate 302 and sawtooth electrode 301. At this time, the exhaust gas that is present in each exhaust gas passage 304 is formed into a plasma. More specifically, when a high electric field is applied to the exhaust gas containing N₂O from the power supply 208 with the thickness of each dielectric plate 302 set at a proper value, the exhaust gas is formed into a plasma by means of glow discharge. In this embodiment, quartz glass plates having a thickness of 5mm were employed as dielectric plates 302 and the applied voltage was set at 10 to 17KV to obtain a glow-discharge plasma. The dielectric plates 302 prevent the glow discharge from becoming an arc discharge.

The N₂O concentation in the exhaust gas outlet pipe 207 is measured with the second gas analyzer 210. In this embodiment, the N₂O concentation was 3 to 5ppm. This means that the N₂O gas which first had a concentration of 80 to 120ppm was decomposed substantially completely through the plasma reaction vessel 211. The mechanism may be considered as follows.

Since the above-described plasma is a glow-discharge plasma of exhaust gas containing N₂O gas, the gas molecules in the exhaust gas are excited or dissociated by collision of electrons. As a result, it is considered that a chemical reaction such as that represented by the formula (7) takes place:

2N₂O+ electronic energy of about 12.94eV → 2N₂+O₂ (7)

It should be noted that when NO and NO₂ are mixed in the exhaust gas, the following reactions are considered to be taking place at the same time:

2NO+ electronic energy of about 9.25eV → N₂+O₂ (8)

2NO₂+ electronic energy of about 9.78eV → N₂+2O₂ (9)

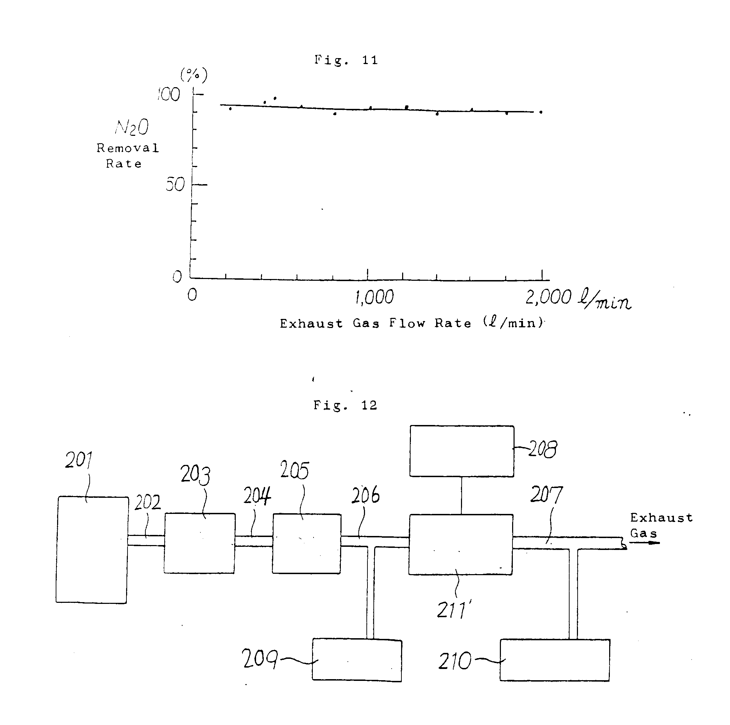

Fig. 11 is a graph showing N₂O (80 to 120ppm) removing conditions attained by this embodiment. It will be understood from the figure that an N₂O removal rate of 90% or more is obtained in the exhaust gas flow rate range of from 100 to 2,000ℓ/min.

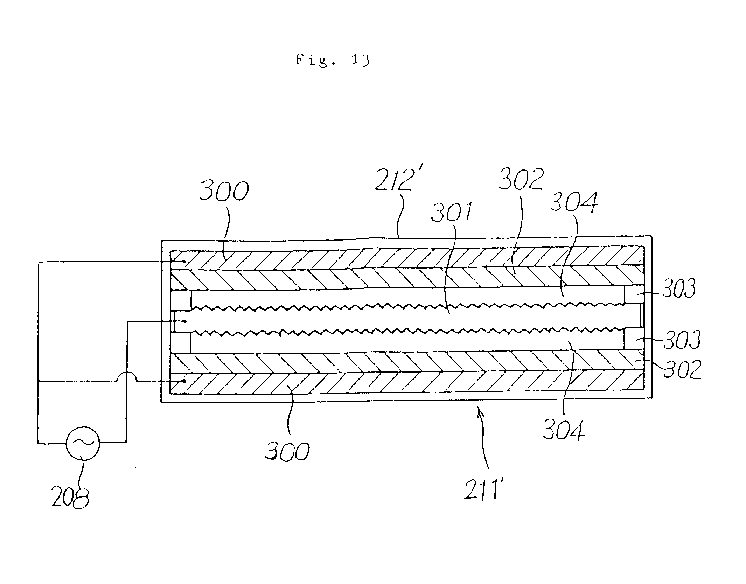

A fourth embodiment of the present invention will next be explained. Fig. 12 is a block diagram showing the general arrangement of this embodiment, and Fig. 13 is a transverse sectional view of the plasma reaction vessel in this embodiment. It should be noted that description of the same members or portions as those in the third embodiment is omitted and members and portions which are different from those in the third embodiment will be mainly explained below. Fig. 13 shows the arrangement of electrodes inside the plasma reaction vessel 211'. A sawtooth corrugated electrode 301 is provided in the center of the casing 212', and a pair of flat plate electrodes 300 are provided so as to face both the surfaces, respectively, of the corrugated electrode 301 with a predetermined space. In addition, a flat plate 302 made of a dielectric material is provided between the sawtooth electrode 301 and each flat plate electrode 300 and in contact with the electrode 300. The flat plate electrodes 300 and the sawtooth electrodes 301 are connected to a power supply 208.

In the above-described arrangement, when exhaust gas flows through gas passages 304 in the plasma reaction vessel 211', the exhaust gas is formed into a plasma and activated, so that the reactions represented by the formulae (7) to (9) take place, thereby enabling nitrogen oxides in the exhaust gas to be removed efficiently.

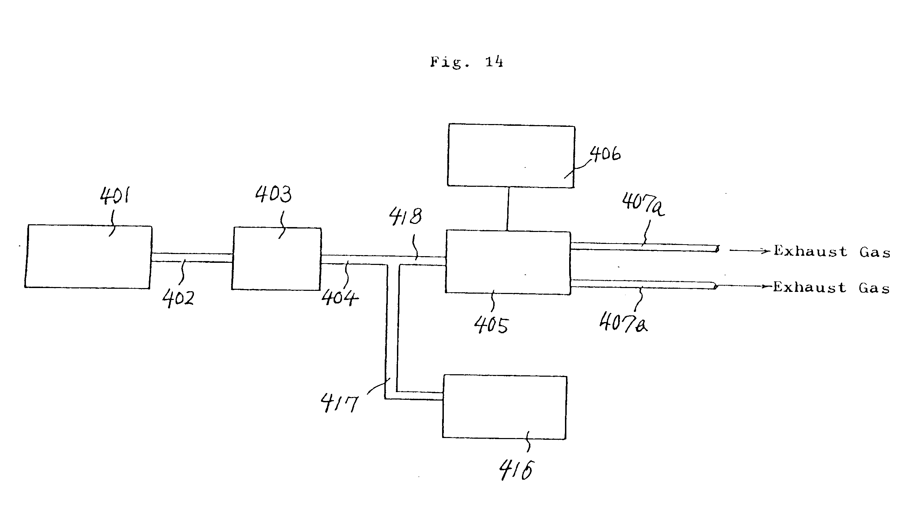

A fifth embodiment of the present invention will next be explained with reference to Figs. 14 to 16.

Referring to Fig. 14, the reference numeral 401 denotes a general-purpose combustion furnace which is an object of exhaust emission control. The reference numeral 402 denotes an exhaust pipe for carrying the exhaust gas from the combustion furnace 401 to a dust collector (e.g., cyclone collector) 403. In the dust collector 403, particles that are contained in the exhaust gas are removed. The reference numeral 404 denotes an exhaust pipe for carrying the exhaust gas from the dust collector 403 to an inlet pipe 418 of a plasma reactor 405. The reference numeral 406 denotes a power supply for applying a plasma generating voltage to the electrodes of the plasma reactor 405. The reference numerals 407a and 407b denote exhaust gas outlet pipes which are connected to the plasma reactor 405. The reference numeral 416 denotes an ammonia supply device that supplies ammonia at a flow rate which may be set as desired within the range of from several ℓ/min to several tens of ℓ/min, the ammonia being supplied to an exhaust gas inlet pipe 418 through an ammonia supply pipe 417 which is connected to the exhaust pipe 404.

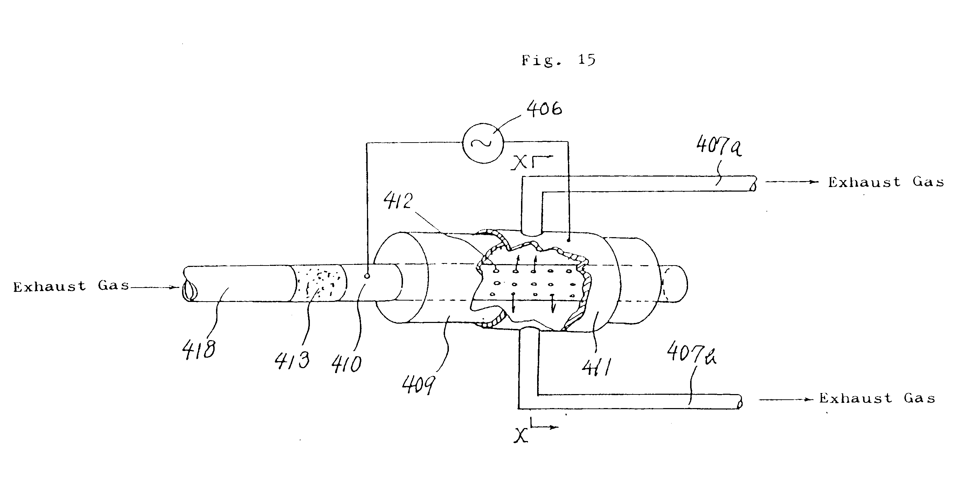

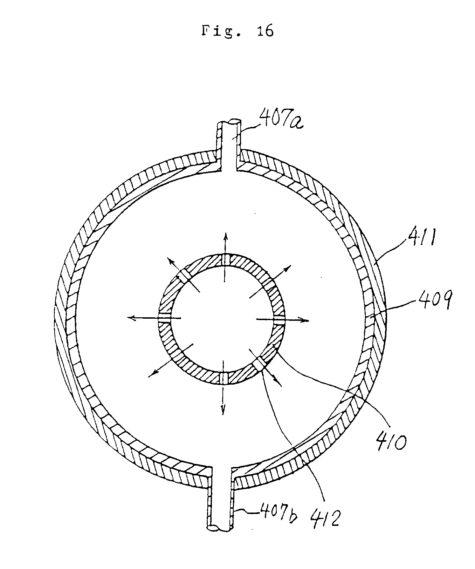

The plasma reactor 405 will next be explained in detail with reference to Figs. 15 and 16. It should be noted that Fig. 16 is a sectional view taken along the line X-X of Fig. 15.

A cylindrical internal electrode 410 extends through a cylindrical reaction vessel 409 both ends of which are closed and which has openings in the side wall. The internal electrode 410 has a plurality of bores 412 provided in the peripheral wall.

An external electrode 411 is provided on the outer periphery of the reaction vessel 409 so as to surround it, and a pair of exhaust gas outlet pipes 407a and 407b are connected to the respective openings provided in the side wall of the reaction vessel 409 in such a manner that outlet pipes 407a and 407b extend through the external electrode 411.

The reaction vessel 409 is made of glass in this embodiment. However, the material for the reaction vessel 409 is not necessarily limited to glass and any desired dielectric material, for example, ceramics, may be used. The reference numeral 418 denotes an exhaust gas inlet pipe which is connected to the internal electrode 410 through an electrical insulating pipe 413.

In the plasma reactor 405 having the above-described arrangement, ammonia is supplied through the ammonia supply pipe 417 to the exhaust pipe 404 where it is mixed with the exhaust gas from the combustion furnace 401. The gas mixture is then introduced via the electrical insulating pipe 413 into the reaction vessel 409 through the bores 412 in the internal electrode 410. In the reaction vessel 409, the gas mixture is made harmless through the above-described reactions caused by a voltage applied to the electrodes from the power supply 406. The treated exhaust gas is then discharged to the outside from the exhaust gas outlet pipes 407a and 407b.

Referring to Fig. 14, the exhaust gas containing NOₓ and SOₓ generated from the combustion furnace 401 is carried through the exhaust pipe 402 to the dust collector 403 where particles are removed from the exhaust gas and the gas is then introduced into the internal electrode 410 through the exhaust pipe 404 and the exhaust gas inlet pipe 418 and the electrical insulating pipe 413 of the plasma reactor 405. The exhaust gas enters the reaction vessel 409 through the bores 412 provided in the internal electrode 410 and is then discharged to the outside through the exhaust gas outlet pipes 407a and 407b. On the other hand, ammonia is supplied from the ammonia supply device 416 through the ammonia supply pipe 417 and the exhaust gas inlet pipe 418 and introduced into the reaction vessel 409 through the bores 412 in the internal electrode 410 at a flow rate in the range of from several ℓ/min to several tens of ℓ/min.

Meantime, electric power is supplied to the internal and external electrodes 410 and 411 from the power supply 406 to generate a plasma of the exhaust gas mixed with ammonia present in the space between the internal and external electrodes 410 and 411.

This plasma is a glow-discharge plasma whereby gas molecules such as ammonia, NOₓ and SOₓ are excited and dissociated to form a chemically active state, thereby performing denitration and desulfurization represented by the formulae (3) to (6) described in connection with the first embodiment.

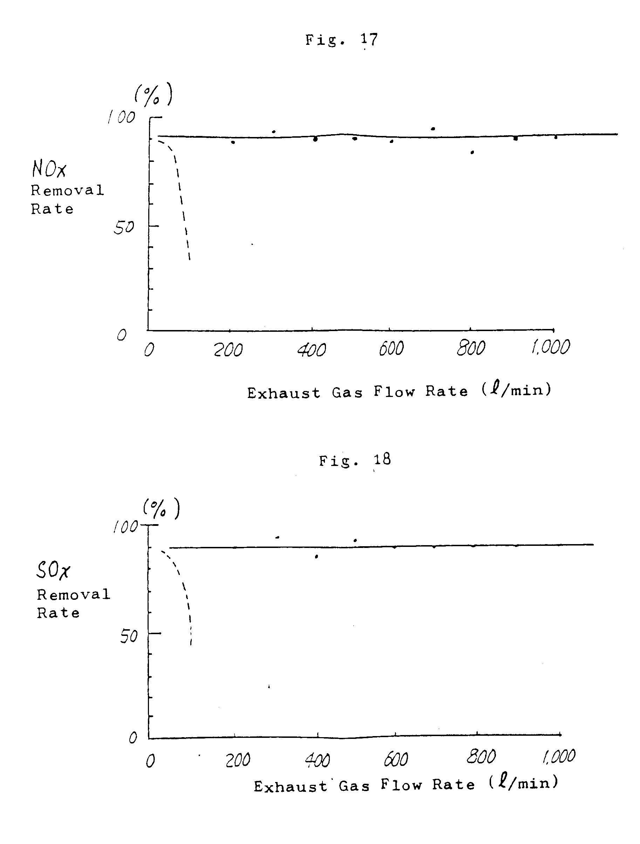

Figs. 17 and 18 show NOₓ (50 to 200ppm) and SOₓ (about 100ppm) removing conditions attained by the apparatus of this embodiment. In these figures, the chain lines show the results obtained by the prior art, while the solid lines show the result obtained by this embodiment.

Fig. 17 is a graph showing the relationship between the NOₓ removal rate and the flow rate of the exhaust gas.

As will be clear from Fig. 17, although in the prior art the upper limit of the flow rate range within which the exhaust gas can be treated is about 100ℓ/min, the apparatus of this embodiment is capable of treating exhaust gas even at a flow rate of 1,000ℓ/min without a lowering in the rate of removal of NOₓ.

Fig. 18 is a graph showing the relationship between the SOₓ removal rate and the flow rate of the exhaust gas.

As will be clear from Fig. 18, although in the prior art the upper limit of the flow rate range within which the exhaust gas can be treated is about 100ℓ/min, the apparatus of this embodiment is capable of treating exhaust gas even at a flow rate of 1,000ℓ/min without a lowering in the rate of removal of SOₓ. Thus, the apparatus of this embodiment has a treating capacity which is about 10 times that of the prior art. It should be noted that, although in this embodiment an exhaust gas containing both NOₓ and SOₓ is treated, the present invention may also be applied to the treatment of an exhaust gas containing only NOₓ or SOₓ as a harmful gas component.

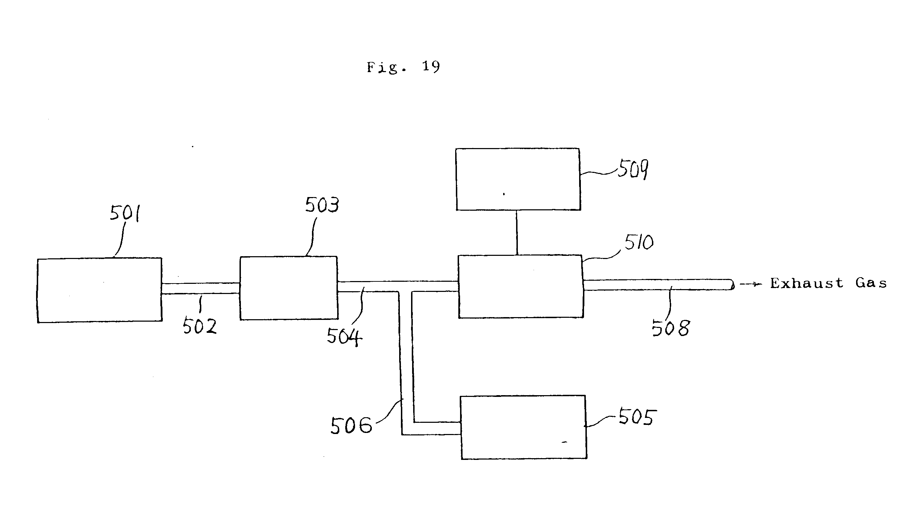

A sixth embodiment of the present invention will next be explained with reference to Figs. 19 to 25.

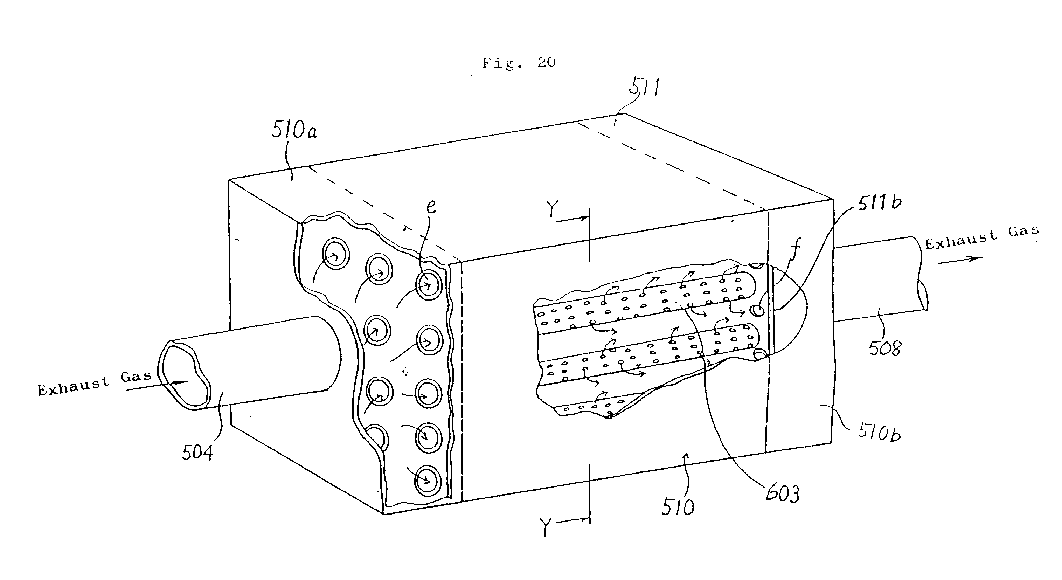

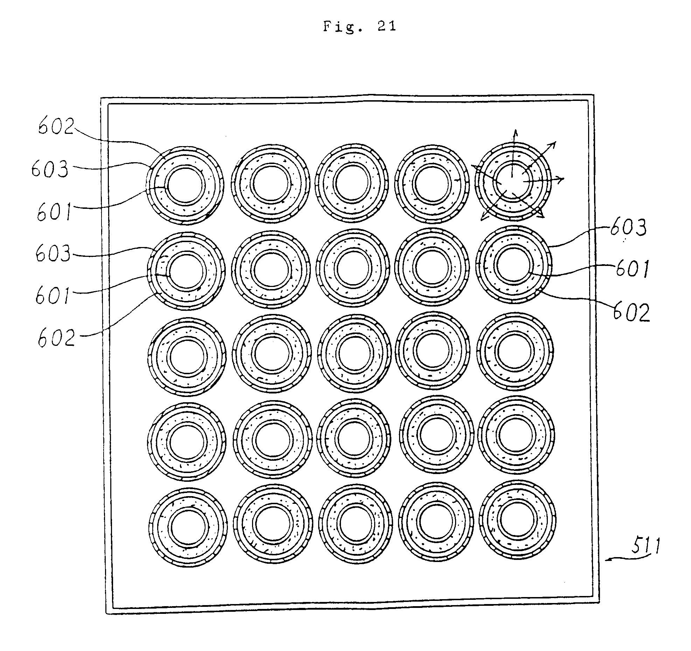

Referring to Fig. 19, the reference numeral 501 denotes a combustion furnace which is an object of exhaust emission control. The exhaust gas from the combustion furnace 501 is carried to a cyclone collector 503 through an exhaust pipe 502. In the dust collector 503, particles that are contained in the exhaust gas are removed. Thereafter, the exhaust gas from the cyclone collector 503 is carried to a plasma reaction vessel (described later) 510 through a cylcone collector exhaust pipe 504. An ammonia supply device 505 supplies ammonia at a flow rate which may be set as desired within the range of from several ℓ/min to several tens of ℓ/min to the intermediate portion of the cylcone collector exhaust pipe 504 through an ammonia supply pipe 506. The gas that is discharged from the plasma reaction vessel 510 is released to the outside through a discharge pipe 508. A power supply 509 supplies electric power for plasma generation to the plasma reaction vessel 510. As shown in Fig. 20, the plasma reaction vessel 510 has a duct-shaped casing 511. Transverse partition walls 511a and 511b are provided in the forward and rearward end portions, respectively, of the casing 511. Between the partition walls 511a and 511b are provided a plurality of first cylindrical electrodes 603 each having a cylindrical reaction vessel (described later), the electrodes 603 extending parallel to the axis of the casing 511 (see Fig. 21).

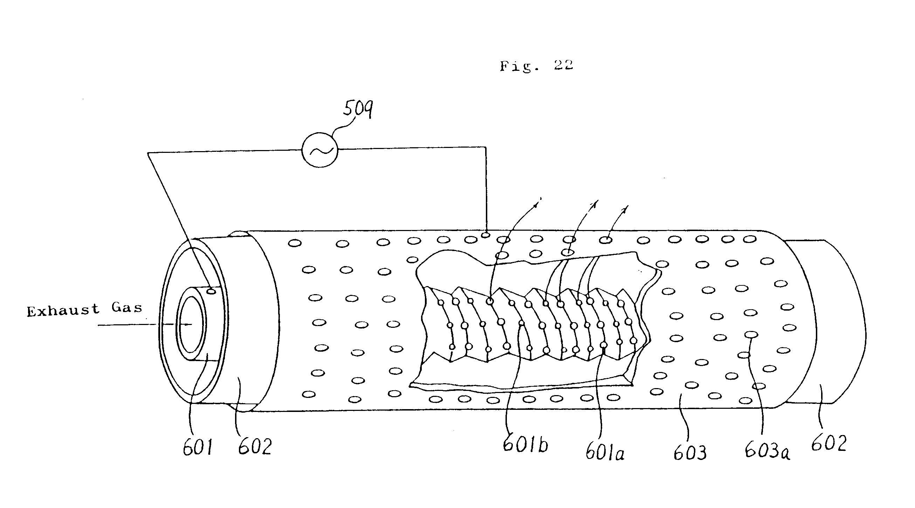

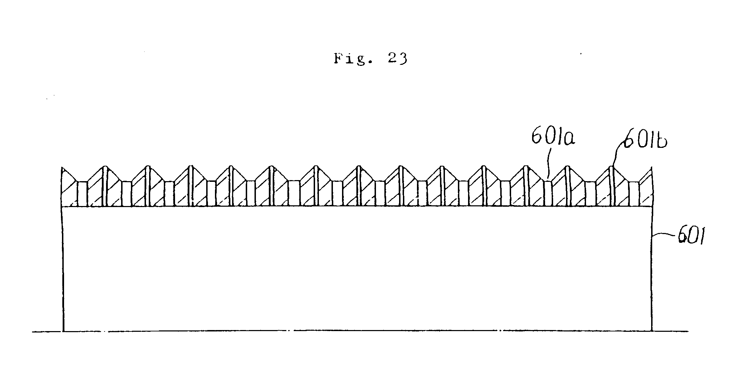

As shown in Fig. 22, each first cylindrical electrode 603 is made of aluminum or copper and has a plurality of first bores 603a for gas passage which are provided in the side wall at predetermined spacings. A cylindrical reaction vessel 602 made of glass is provided inside the first cylindrical electrode 603 in such a manner that the outer periphery of the reaction vessel 602 is in contact with the inner periphery of the first cylindrical electrode 603. The side wall of the reaction vessel 602 is provided with a plurality of bores which are coaxial with the corresponding bores 603a and which have a slightly smaller diameter than that of the bores 603a. Further, a second cylindrical electrode 601 made of aluminum or copper is coaxially provided inside the first cylindrical electrode 603. The second cylindrical electrode 601 has threads formed on the outer periphery thereof, and a plurality of radial second and third bores 601a and 601b are provided along the roots and crests, respectively, of the threads (see Fig. 23). It is preferable that the second and third bores 601a and 601b have a diameter of from 1 to 5mm, the pitch of the threads be from 1 to 5mm and the depth of the threads be not greater than about 30mm. It should be noted that either second bores 601a or third bores 601b alone may be provided.

The first and second cylindrical electrodes 603 and 601 are disposed between the partition walls 511a and 511b inside the casing 511 as follows (see Fig. 20):
i) The partition wall 511a provided at the exhaust gas inlet side of the plasma reaction vessel 510, that is, at the forward end thereof, is provided with bores e which are communicated with the insides of the respective second cylindrical electrodes 601 so that the exhaust gas is introduced through the bores e. The forward end of each cylindrical reaction vessel 602 is closed with the partition wall 511a.
(ii) The peripheral portion of the partition wall 511b that is provided at the rear end of the plasma reaction vessel 510 is provided with bores f at predetermined spacings, but the rear end of each second cylindrical electrode 601 is closed with the partition wall 511b. The rear end of the cylindrical reaction vessel 602 is also closed with the partition wall 511b.
(iii) A power supply 509 is connected to the first and second cylindrical electrodes 603 and 601.

In the above-described arrangement, the exhaust gas containing NOₓ and SOₓ from the combustion furnace 501 is supplied to the cyclone collector 503 where particulate dusts are removed, and the exhaust gas is then mixed with ammonia supplied from the ammonia supply device 505 at a flow rate which is about 1% of that of the exhaust gas. The gas mixture is then introduced into the plasma reaction vessel 510. In the plasma reaction vessel 510, the exhaust gas is distributed in the space 510a in front of the forward partition wall 511a so as to enter each second cylindrical electrode 601 through the corresponding bore e and then comes out of the second bores 601a and the third bores 601b into the space within the cylindrical reaction vessel 602 (see Figs. 20 and 22).

A glow discharge occurs in each cylindrical reaction vessel 602 in respone to a high voltage applied between the first and second cylindrical electrodes 603 and 601, thus generating a plasma of the exhaust gas mixed with ammonia. As a result, chemical reactions such as those represented by the formulae (3) to (6) described in connection with the first embodiment take place, thus NOₓ and SOₓ being removed. Thereafter, the exhaust gas emerges into the space inside the casing 511 through the first bores 603a, further emerges into the rear space 510 through the bores f and then flows into the gas discharge pipe 508.

Since the exhaust gas mixed with ammonia mainly flows radially within each cylindrical reaction vessel 602, the glow discharge is maintained without a fear of dying even if the flow rate of exhaust gas which is to be treated is increased higher than in the case where the exhaust gas flows axially as in the prior art. There is no lowering in the removal efficiency, either. In addition, since the glow-discharge region is provided with bores for gas passage, ions are carried by the gas, so that generation of a spark is suppressed.

It should be noted that the thread-shaped projections on the second cylindrical electrode 603 are provided with a view to enabling a glow discharge to occur easily. The reason why the cylindrical reaction vessel 602 made of a dielectric material is disposed between the first and second cylindrical electrodes 603 and 601 and the reason why the diameter of the first bores 601a is greater than that of the bores of the reaction vessel 602 are to control the discharge current so that no arc discharge will be generated.

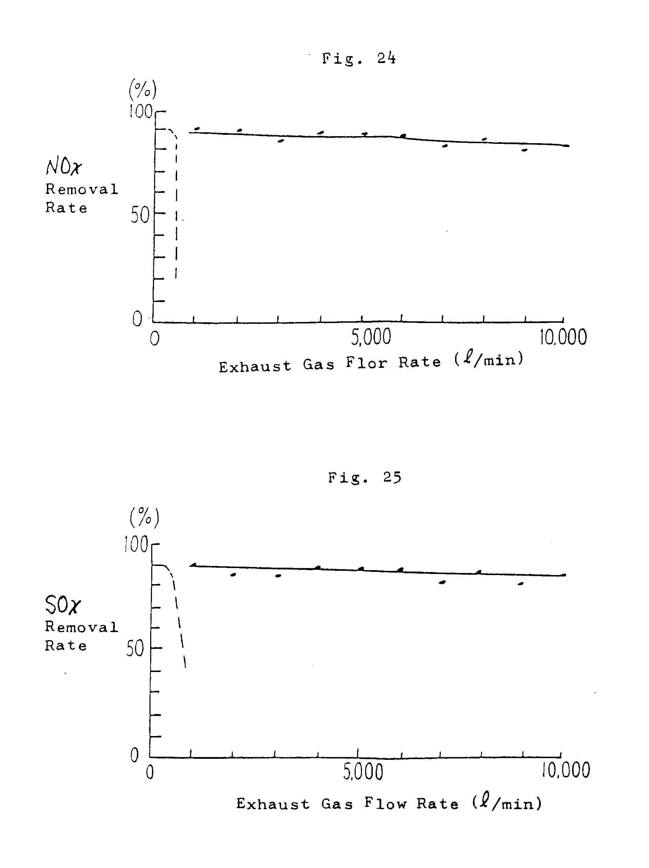

Figs. 24 and 25 show NOₓ (50 to 200ppm) and SOₓ (about 100ppm) removing conditions attained by this embodiment. In these figures, the chain lines show the results obtained by the prior art, while the solid lines show the results by this embodiment. It will be understood that the exhaust gas treating capacity has increased by a large margin.

Thus, it is possible according to this embodiment to treat a large amount of exhaust gas at high efficiency with a relatively small sized apparatus.

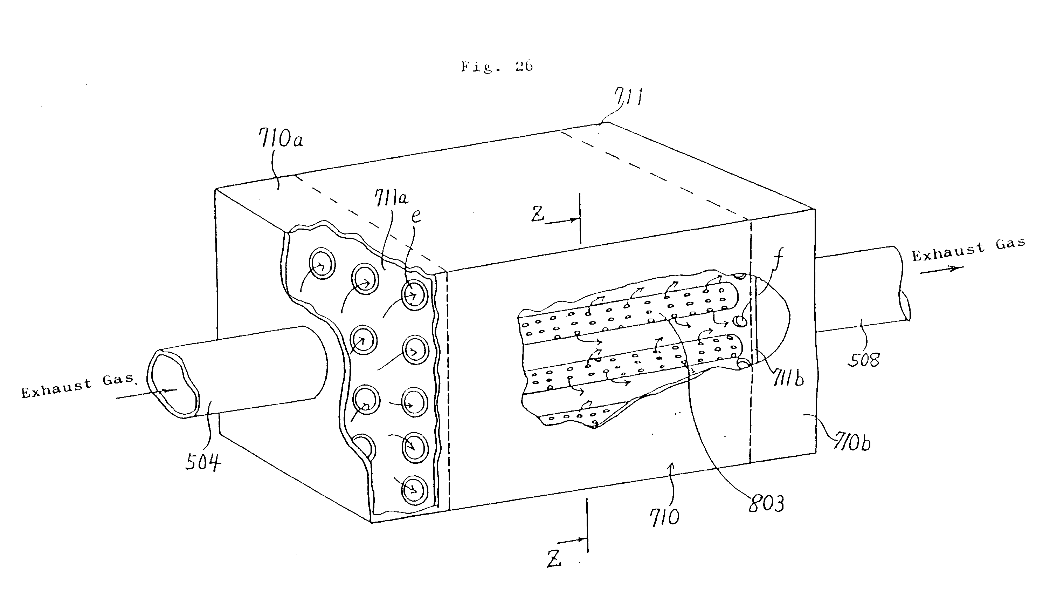

A seventh embodiment of the present invention will next be explained with reference to Figs. 26 to 31.

A plasma reaction vessel 710 shown in Fig. 26 is supplied with the exhaust gas and ammonia from the combustion furnace 501 and the ammonia supply device 505, respectively, which are shown in Fig. 19, through the cyclone collector exhaust pipe 504 and then discharged to the outside from the plasma reaction vessel 710 through the exhaust gas discharge pipe 508, in the same way as in the sixth embodiment.

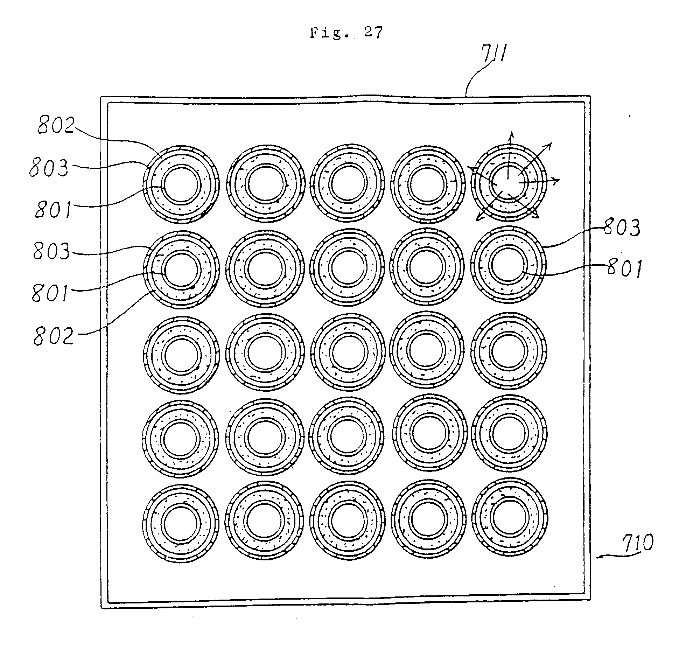

The power supply 509 shown in Fig. 19 supplies electric power for plasma generation to the plasma reaction vessel 710. As shown in Fig. 26, the plasma reaction vessel 710 has a duct-shaped casing 711. Transverse partition walls 711a and 711b are provided in the forward and rearward end portions, respectively, of the casing 711. Between the partition walls 711a and 711b are provided a plurality of reactor units each comprising a cylindrical reaction vessel, a first cylindircal electrode 803 and a second cylindrical electrode 801 (described later), the reactor units extending parallel to the axis of the casing 711 (see Fig. 27).

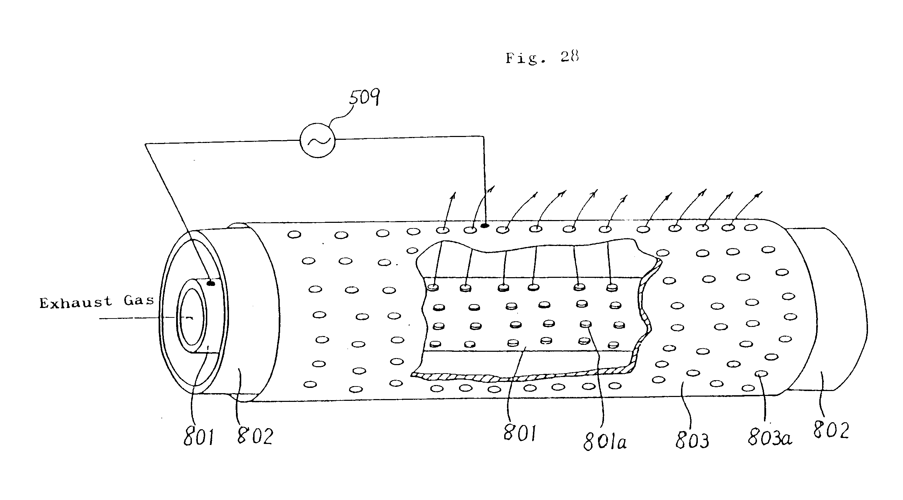

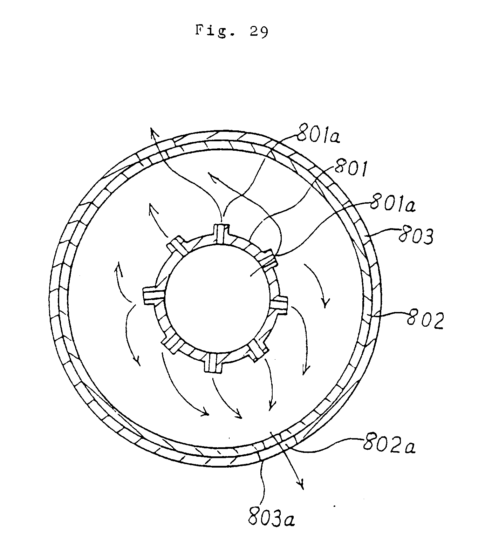

As shown in Fig. 28 and 29, each first cylindrical electrode 803 is made of aluminum or copper and has a plurality of first bores 803a for gas passage which are provided in the side wall at predetermined spacings. A cylindrical reaction vessel 802 made of glass is provided inside the first cylindrical electrode 803 in such a manner that the outer periphery of the reaction vessel 802 is in contact with the inner periphery of the first cylindrical electrode 803. The side wall of the reaction vessel 802 is provided with a plurality of bores which are coaxial with the corresponding bores 803a and which have a slightly smaller diameter than that of the bores 803a. Further, a second cylindrical electrode 801 made of aluminum or copper is coaxially provided inside the cylindrical reaction vessel 802. A plurality of second bores 801a for gas passage are provided in the side wall of the second cylindrical electrode 801. The periphery of each bore 801a is formed in the shape of a cylindrical projection which projects outward (see Fig. 29).

It should be noted that the second bores 801a have a diameter of from 1 to 5mm and the height of the projections is 2 to 4 times the bore diameter. The number of first bores 803a is about 1/10 to 1/50 of that of second bores 801a.

The first and second cylindrical electrodes 803 and 801 are disposed between the partition walls 711a and 711b inside the casing 711 as follows (see Fig. 26):
(i) The partition wall 711a provided at the exhaust gas inlet side of the plasma reaction vessel 710, that is, at the forward end thereof, is provided with bores e which are communicated with the insides of the respective second cylindrical electrodes 801 so that the exhaust gas is introduced through the bores e. The forward end of each cylindrical reaction vessel 802 is closed with the partition wall 711a.
ii) The peripheral portion of the partition wall 711b that is provided at the rear end of the plasma reaction vessel 710 is provided with bores f at predetermined spacings, but the rear end of each second cylindrical electrode 801 is closed with the partition wall 711b. The rear end of the cylindrical reaction vessel 802 is also closed with the partition wall 711b.
(iii) A power supply 509 is connected to the first and second cylindrical electrodes 803 and 801.

In the above-described arrangement, the exhaust gas containing NOₓ and SOₓ from the combustion furnace is supplied to the cyclone collector where particulate dusts are removed, and the exhaust gas is then mixed with ammonia supplied from the ammonia supply device at a flow rate which is about 1% of that of the exhaust gas. The gas mixture is then introduced into the plasma reaction vessel 710. In the plasma reaction vessel 710, the exhaust gas is distributed in the space 710a in front of the forward partition wall 711a so as to enter each second cylindrical electrode 801 through the corresponding bore e and then comes out of the second bores 801a into the space within the cylindrical reaction vessel 802 through the second bores 801a (see Figs. 26 and 28). In this space, chemical reactions such as those in the above-described embodiments take place, thus NOₓ and SOₓ being removed. Thereafter, the exhaust gas emerges into the space inside the casing 711 through the first bores 803a, further emerges into the rear space 710b through the bores f and then flows into the gas discharge pipe 508.

Since the exhaust gas mixed with ammonia mainly flows radially within each cylindrical reaction vessel 802, the glow discharge is maintained without a fear of dying even if the flow rate of exhaust gas which is to be treated is increased higher than in the case where the exhaust gas flows axially as in the prior art. There is no lowering in the removal efficiency, either.

It should be noted that the projections around the second bores 801a are provided with a view to enabling a glow discharge to occur easily. The reason why the cylindrical reaction vessel 802 made of a dielectric material is disposed between the first and second cylindrical electrodes 803 and 801 and the reason why the diameter of the first bores 803a is greater than that of the bores of the reaction vessel 802 are to control the discharge current so that no arc discharge will be generated.

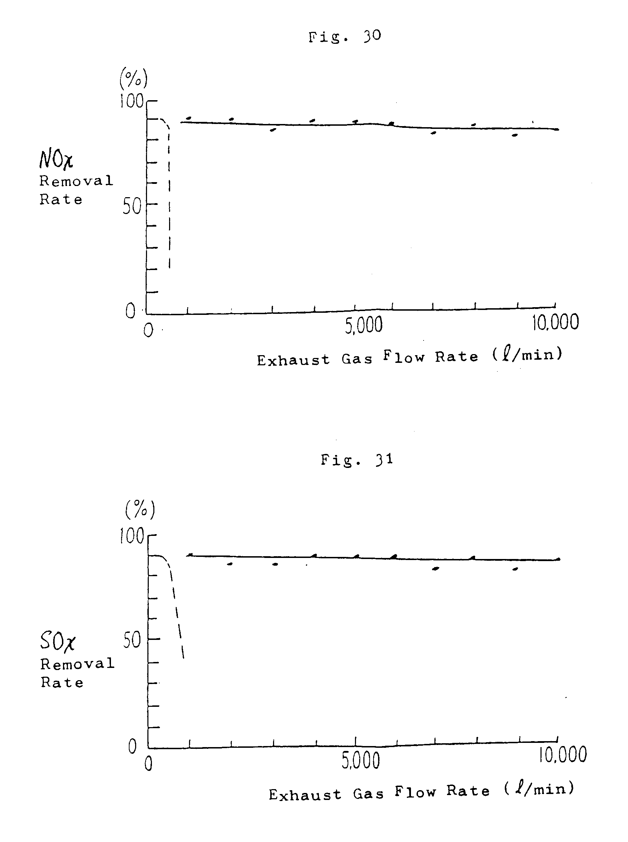

Figs. 30 and 31 show NOₓ (50 to 200ppm) and SOₓ (about 100ppm) removing conditions attained by this embodiment. In these figures, the chain lines show the results obtained by the prior art, while the solid lines show the results by this embodiment. It will be understood that the exhaust gas treating capacity has increased by a large margin.

Thus, it is possible according to this embodiment to treat a large amount of exhaust gas at high efficiency with a relatively small sized apparatus.

As has been described above, it is possible according to the present invention to efficiently treat a large amount of exhaust gas containing nitrogen oxides and/or sulfur oxides which is generated from a combunation furnace, which has heretofore been impossible with the prior art.

## Claims

1. An exhaust gas treating apparatus for treating nitrogen oxides and/or sulfur oxides contained in exhaust gas by the use of a glow-discharge plasma, comprising:
a cylindrical reaction vessel (5) both ends of which are open and which is made of an electrical insulator;
a plurality of porous electrodes (10, 11) provided inside said reaction vessel (5) in such a manner that the planes of said electrodes (10, 11) extend substantially perpendicular to the axis of said reaction vessel (5);
a porous dielectric member (9) installed between each pair of adjacent porous electrodes (10, 11) with a predetermined space provided between the same and one of said two electrodes;
a power supply (6) for applying a voltage for glow discharge to said porous electrodes (10, 11); and
an ammonia supply means (16, 17) connected to an inlet pipe of said reaction vessel (5).

2. An exhaust gas treating apparatus for treating nitrogen oxides and/or sulfur oxides contained in exhaust gas by the use of a glow-discharge plasma, comprising:
a plurality of flat plate electrodes (101) and a plurality of sawtooth electrodes (102) each constituted by a flat plate with corrugated surfaces, said flat plate (101) and sawtooth electrodes (102) being disposed alternately and parallel to each other; and
a power supply (6) connected to said flat plate (101) and sawtooth electrodes (102);
wherein a fluid which is to be treated is arranged to flow between each pair of adjacent flat plate (101) and sawtooth electrodes (102).

3. An exhaust gas treating apparatus according to Claim 2, wherein said fluid is arranged to flow in a direction perpendicular to the long edges of the crests of the corrugations formed on said sawtooth electrodes (102) and an ammonia supply (16, 17) is provided.

4. An exhaust gas treating apparatus according to Claim 2, further including a flat plate (302) made of a dielectric material which is disposed between each pair of adjacent sawtooth (301) and flat plate (300) electrodes and in contact with said flat plate electrode (300) and a gas analyser (209, 210).

5. An exhaust gas treating apparatus according to claim 2 wherein said plurality of flat plate electrodes (300) are each sandwiched between flat dielectric plates (302); and a fluid which is to be treated is arranged to flow between each pair of adjacent flat plate (300) and sawtooth (301) electrodes, the flow of the fluid being parallel to the long edges of the crests of said sawtooth electrodes (301); and a gas analyser (209, 210) is provided.

6. An exhaust gas treating apparatus for treating nitrogen oxides and/or sulfur oxides contained in exhaust gas by the use of a glow-discharge plasma, comprising:
a cylindrical reaction vessel (409) both ends of which are closed and which is made of a dielectric material, said reaction vessel having openings provided in the side wall;
a cylindrical internal electrode (410) coaxially extending through said reaction vessel (409) and having a plurality of bores provided in the peripheral wall, said internal electrode (410) being supplied with exhaust gas mixed with ammonia;
an external electrode (411) provided in such a manner as to surround the outer periphery of said reaction vessel (409);
an exhaust gas outlet or outlets (407a, 407b) extending through said external electrode (411); and
means (406) for applying a voltage for glow discharge between said internal and external electrodes (410, 411).

7. An exhaust gas treating apparatus according to Claim 6, comprising:
a cylindrical reaction vessel (602) made of a dielectric material and having a plurality of bores for gas passage provided in the side wall;
a first cylindrical electrode (603) made of an electrical conductor and having a plurality of bores (603a) for gas passage provided in the side wall, said first cylindrical electrode (603) covering the outside wall of said cylindrical reaction vessel (602);
a second cylindrical electrode (601) made of an electrical conductor, said second cylindrical electrode having threads formed on the outer peripheral surface and a plurality of bores (601a, 601b) for gas passage provided along the crests and/or roots of said threads, and said second cylindrical electrode (601) being coaxially provided inside said cylindrical reaction vessel (602); and
a power supply (509) connected to said first and second cylindrical electrodes (603, 601);
wherein a plurality of units each comprising said cylindrical reaction vessel (602) and said first and second cylindrical electrodes (603, 601) are disposed parallel to each other and an exhaust gas mixed with ammonia which is to be treated is introduced into said second cylindrical electrodes (601).

8. An exhaust gas treating apparatus according to Claim 6, comprising:
a cylindrical reaction vessel (802) made of a dielectric material and having a plurality of bores for gas passage provided in the side wall;
a first cylindrical electrode (803) made of an electrical conductor and having a plurality of bores (803a) for gas passage provided in the side wall, said first cylindrical electrode (803) covering the outside wall of said cylindrical reaction vessel (802);
a second cylindrical electrode (801) made of an electrical conductor, said second cylindrical electrode (801) having a plurality of bores (801a) for gas passage provided in the side wall, each bore (801a) having a cylindrical outward projection provided around it, and said second cylindrical electrode (801) being coaxially provided inside said cylindrical reaction vessel (802); and
a power supply (509) connected to said first and second cylindrical electrodes (803, 801);
wherein a plurality of units each comprising said cylindrical reaction vessel (802) and said first and second cylindrical electrodes (803, 801) are disposed parallel to each other and an exhaust gas mixed with ammonia which is to be treated is introduced into said second cylindrical electrodes (801).

## Patentansprüche

1. Abgasbehandlungsgerät zum Behandeln von in einem Abgas enthaltenen Stickoxiden und/oder Schwefeloxiden mittels eines Glimmentladungsplasmas, umfassend:
ein zylindrisches Reaktionsgefäß (5), dessen beide Enden offen sind und das aus einem elektrischen Isolator geformt ist,
mehrere poröse Elektroden (10, 11), die innerhalb des Reaktionsgefäßes (5) derart vorgesehen sind, daß die Ebenen der Elektroden (10, 11) im wesentlichen senkrecht zur Achse des Reaktionsgefäßes (5) verlaufen,
ein zwischen je zwei benachbarte poröse Elektroden (10, 11) mit einem vorbestimmten Raum,oder Abstand zwischen ihm und einer der beiden Elektroden eingebautes poröses dielektrisches Element (9),
eine Stromversorgung (6) zum Anlegen einer Spannung für Glimmentladung an die porösen Elektroden (10, 11) und
eine an ein Elnlaßrohr des Reaktionsgefäßes (5) angeschlossene Ammoniakzuführeinrichtung (16, 17).

2. Abgasbehandlungsgerät zum Behandeln von in einem Abgas enthaltenen Stickoxiden und/oder Schwefeloxiden mittels eines Glimmentladungsplasmas, umfassend:
mehrere flache Plattenelektroden (101) und mehrere Sägezahnelektroden (102), die jeweils durch eine flache Platte mit gewellten Oberflächen gebildet sind, wobei die flache Plattenelektroden (101) und die Sägezahnelektroden (102) einander abwechselnd und parallel zueinander angeordnet sind, und
eine mit den flachen Plattenelektroden (101) und den Sägezahnelektroden (102) verbundene Stromversorgung (6), wobei ein zu behandelndes Fluid zwischen jedem Paar benachbarter flacher Plattenelektroden (101) und Sägeahnelektroden (102) zu strömen vermag.

3. Abgasbehandlungsgerät nach Anspruch 2, wobei das Fluid in einer Richtung senkrecht zu den langen Kanten der Scheitel der an den Sägezahnelektroden (102) geformten Wellungen zu strömen vermag und eine Ammoniakzuführung (16, 17) vorgesehen ist.

4. Abgasbehandlungsgerät nach Anspruch 2, ferner umfassend eine aus einem dielektrischen Werkstoff geformte flache Platte (302), die zwischen jedem Paar benachbarter Sägezahnelektroden (301) und flacher Plattenelektroden (300) und in Berührung mit der (jeweiligen) flachen Plattenelektrode (300) angeordnet ist, und eine Gasanalysiereinrichtung (209, 210).

5. Abgasbehandlungsgerät nach Anspruch 2, wobei die mehreren flachen Plattenelektroden (300) jeweils zwischen flache dielektrische Platten (302) eingefügt sind und ein zu behandelndes Fluid zwischen jedem Paar benachbarter flacher Plattenelektroden (300) und Sägezahnelektroden (301) zu strömen vermag, wobei die Strömung des Fluids parallel zu den langen Kanten der Scheitel der Sägezahnelektroden (301) erfolgt, und eine Gasanalysiereinrichtung (209, 210) vorgesehen ist.

6. Abgasbehandlungsgerät zum Behandeln von in einem Abgas enthaltenen Stickoxiden und/oder Schwefeloxiden mittels eines Glimmentladungsplasmas, umfassend:
ein zylindrisches Reaktionsgefäß (409), dessen beide Enden geschlossen sind, das aus einem dielektrischen Werkstoff geformt ist und das in der Seitenwand vorgesehene Öffnungen aufweist,
eine sich koaxial durch das Reaktionsgefäß (409) erstreckende und eine Anzahl von in der Umfangswand vorgesehene Bohrungen aufweisende zylindrische innere Elektrode (410), die mit einem mit Ammoniak vermischten Abgas beschickt wird,
eine äußere Elektrode (411) in solcher Anordnung, daß sie den Außenumfang des Reaktionsgefäßes (409) umgibt,
einen Abgasauslaß oder mehrere -auslässe (407a, 407b), der bzw. die die äußere Elektrode (411) durchsetzt bzw. durchsetzen, und
eine Einrichtung (406) zum Anlegen einer Spannung für Glimmentladung zwischen innere und äußere Elektroden (410, 411).

7. Abgasbehandlungsgerät nach Anspruch 6, umfassend:
ein zylindrisches Reaktionsgefäß (602) aus einem dielektrischen Werkstoff und mit einer Anzahl von in der Seitenwand vorgesehenen Bohrungen für Gasdurchtritt,
eine aus einem elektrischen Leiter geformte erste zylindrische Elektrode (603) mit einer Anzahl von in der Seitenwand vorgesehenen Bohrungen (603a) für Gasdurchtritt, wobei die erste zylindrische Elektrode (603) die Außenwand des zylindrischen Reaktionsgefäßes (602) bedeckt,
eine aus einem elektrischen Leiter geformte zweite zylindrische Elektrode (601) mit einem an ihrer Außenumfangsfläche geformten Gewinde und einer Vielzahl von für Gasdurchtritt vorgesehenen Bohrungen (601a, 601b) längs der Spitzen und/oder Sohlen des Gewindes, wobei die zweite zylindrische Elektrode (601) koaxial im Inneren des zylindrischen Reaktionsgefäßes (602) angeordnet ist, und
eine mit den ersten und zweiten zylindrischen Elektroden (603, 601) verbundene Stromversorgung (509),
wobei mehrere Einheiten, jeweils bestehend aus dem zylindrischen Reaktionsgefäß (602) sowie den ersten und zweiten zylindrischen Elektroden (603, 601), parallel zueinander angeordnet sind und ein zu behandelndes, mit Ammoniak vermischtes Abgas in die zweiten zylindrischen Elektroden (601) eingeleitet wird.

8. Abgasbehandlungsgerät nach Anspruch 6, umfassend:
ein zylindrisches Reaktionsgefäß (802) aus einem dielektrischen Werkstoff und mit einer Vielzahl von in der Seitenwand vorgesehenen Bohrungen für Gasdurchtritt,
eine aus einem elektrischen Leiter geformte erste zylindrische Elektrode (803) mit einer Vielzahl von in der Seitenwand vorgesehenen Bohrungen (803a) für Gasdurchtritt, wobei die erste zylindrische Elektrode (803) die Außenwand des zylindrischen Reaktionsgefäßes (802) bedeckt,
eine aus einem elektrischen Leiter geformte zweite zylindrische Elektrode (801) mit einer Vielzahl von in der Seitenwand vorgesehenen Bohrungen (801a) für Gasdurchtritt, wobei jede Bohrung (801a) einen um sie herum angeordneten, nach außen ragenden zylindrischen Fortsatz oder Stutzen aufweist und die zweite zylindrische Elektrode (801) koaxial im Inneren des zylindrischen Reaktionsgefäßes (802) angeordnet ist, und
eine mit den ersten und zweiten zylindrischen Elektroden (803, 801) verbundene Stromversorgung (509),
wobei mehrere Einheiten, jeweils bestehend aus dem zylindrischen Reaktionsgefäß (802) sowie den ersten und zweiten zylindrischen Elektroden (803, 801), parallel zueinander angeordnet sind und ein zu behandelndes, mit Ammoniak vermischtes Abgas in die zweiten zylindrischen Elektroden (801) eingeleitet wird.

## Revendications

1. Appareil de traitement de gaz d'échappement pour traiter des oxydes d'azote et/ou des oxydes de soufre contenus dans des gaz d'échappement en utilisant un plasma à décharge luminescente, comprenant:
une enceinte de réaction cylindrique (5) dont les deux extrémités sont ouvertes et qui est constituée en un isolant électrique;
un groupe d'électrodes poreuses (10, 11) disposées à l'intérieur de ladite enceinte de réaction (5) de telle manière que les plans desdites électrodes (10, 11) s'étendent sensiblement perpendiculairement à l'axe de ladite enceinte de réaction (5);
un organe diélectrique poreux (9) installé entre chaque paire d'électrodes poreuses adjacentes (10, 11) avec un espacement déterminé prévu entre celui-ci et l'une desdites deux électrodes;
une alimentation électrique (6) pour appliquer une tension de décharge luminescente auxdites électrodes poreuses (10, 11); et
un moyen d'alimentation en ammoniac (16, 17) relié à un tuyau d'admission de ladite enceinte de réaction (5).

2. Appareil de traitement de gaz d'échappement pour traiter des oxydes d'azote et/ou des oxydes de soufre contenus dans des gaz d'échappement en utilisant un plasma à décharge luminescente, comprenant:
un groupe de plaques électrodes plates (101) et un groupe d'électrodes en dents de scie (102) constituées chacune par une plaque plate pourvue de surfaces striées, ladite plaque plate (101) et lesdites électrodes en dents de scie (102) étant disposées alternativement et parallèlement l'une à l'autre; et
une alimentation électrique (6) reliée à ladite plaque plate (101) et auxdites électrodes en dents de scie (102);
dans lequel un fluide à traiter est disposé de manière à s'écouler entre chaque paire formée par une plaque électrode plate (101) et une électrode en dents de scie (102), adjacentes.

3. Appareil de traitement de gaz d'échappement conforme à la revendication 2, dans lequel ledit fluide est disposé pour s'écouler dans une direction perpendiculaire aux bords longs des crêtes des stries formées sur lesdites électrodes en dents de scie (102) et une alimentation en ammoniac (16, 17) est prévue.

4. Appareil de traitement de gaz d'échappement conforme à la revendication 2, comportant en outre une plaque plate (302) constituée d'un matériau diélectrique qui est disposée entre chaque paire formée par une électrode en dents de scie (301) et une plaque électrode plate (300), adjacentes, et qui est en contact avec ladite plaque électrode plate (300) et un analyseur de gaz (209, 210).

5. Appareil de traitement de gaz d'échappement conforme à la revendication 2, dans lequel chacune des plaques électrodes plates (300) dudit groupe est prise en sandwich entre des plaques diélectriques plates (302); et un fluide à traiter est disposé pour s'écouler entre chaque paire formée par une plaque électrode plate (300) et une électrode en dents de scie (301), adjacentes, l'écoulement du fluide étant parallèle aux bords longs des crêtes desdites électrodes en dents de scie (301); et un analyseur de gaz (209, 210) est prévu.

6. Appareil de traitement de gaz d'échappement pour traiter des oxydes d'azote et/ou des oxydes de soufre contenus dans les gaz d'échappement en utilisant un plasma à décharge luminescente, comprenant:
une enceinte de réaction cylindrique (409) dont les deux extrémités sont fermées et qui est constituée d'un matériau diélectrique, ladite enceinte de réaction ayant des ouvertures pratiquées dans la paroi latérale;
une électrode interne cylindrique (410) s'étendant coaxialement à travers ladite enceinte de réaction (409) et comportant un ensemble d'alésages pratiqués dans la paroi périphérique, ladite électrode interne (410) étant alimentée en gaz d'échappement mélangé avec de l'ammoniac;
une électrode externe (411) prévue de manière à entourer la périphérie extérieure de ladite enceinte de réaction (409);
un orifice ou des orifices de sortie de gaz d'échappement (407a, 407b) s'étendant à travers ladite électrode externe (411); et
un moyen (406) pour appliquer une tension de décharge luminescente entre lesdites électrodes interne et externe (410, 411).

7. Appareil de traitement de gaz d'échappement conforme à la revendication 6, comprenant:
une enceinte de réaction cylindrique (602) constituée d'un matériau diélectrique et comportant un ensemble d'alésages pour le passage de gaz pratiqués dans la paroi latérale;
une première électrode cylindrique (603) constituée d'un conducteur électrique et comportant un ensemble d'alésages (603a) pour le passage de gaz pratiqués dans la paroi latérale, ladite première électrode cylindrique (603) recouvrant la paroi extérieure de ladite enceinte de réaction cylindrique (602);
une seconde électrode cylindrique (601) constituée d'un conducteur électrique, ladite seconde électrode cylindrique possédant des filetages formés sur la surface périphérique extérieure et un ensemble d'alésages (601a, 601b) pour le passage de gaz, prévus le long des crêtes et/ou des fonds desdits filetages, et ladite seconde électrode cylindrique (601) étant disposée coaxialement à l'intérieur de ladite enceinte de réaction (602); et
une alimentation électrique (509) reliée auxdites première et seconde électrodes cylindriques (603, 601);
dans lequel un ensemble d'unités, comprenant chacune ladite enceinte de réaction cylindrique (602) et lesdites première et seconde électrodes cylindriques (603, 601), sont disposées parallèlement l'une à l'autre, et un gaz d'échappement mélangé à de l'ammoniac qui doit être traité est introduit dans lesdites secondes électrodes cylindriques (601).

8. Appareil de traitement de gaz d'échappement conforme à la revendication 6, comprenant:
une enceinte de réaction cylindrique (802) constituée d'un matériau diélectrique et comportant un ensemble d'alésages pour le passage de gaz pratiqués dans la paroi latérale;
une première électrode cylindrique (803) constituée d'un conducteur électrique et comportant un ensemble d'alésages (803a) pour le passage de gaz pratiqués dans la paroi latérale, ladite première électrode cylindrique (803) recouvrant la paroi extérieure de ladite enceinte de réaction cylindrique (802);
une seconde électrode cylindrique (801) constituée d'un conducteur électrique, ladite seconde électrode cylindrique (801) comportant un ensemble d'alésages (801a) pour le passage de gaz pratiqués dans la paroi latérale, chaque alésage (801a) comportant à son pourtour une saillie cylindrique dirigée vers l'extérieur, et ladite seconde électrode cylindrique (801) étant disposée coaxialement à l'intérieur de ladite enceinte cylindrique de réaction (802); et
une alimentation électrique (509) reliée auxdites première et seconde électrodes cylindriques (803, 801);
dans lequel un ensemble d'unités comprenant chacune ladite enceinte cylindrique de réaction (802) et lesdites première et seconde électrodes cylindriques (803, 801) sont disposées parallèlement l'une à l'autre et un gaz d'échappement mélangé avec de l'ammoniac qui doit être traité, est introduit dans lesdites secondes électrodes cylindriques (801).
